(19) Europäisches Patentamt European Patent Office Office européen des brevets

(11) **EP 1 838 031 A1**

(12) **EUROPEAN PATENT APPLICATION**
published in accordance with Art. 158(3) EPC

(43) Date of publication:
26.09.2007 Bulletin 2007/39

(51) Int Cl.:
*H04L 9/32* (2006.01) *G09C 1/00* (2006.01)

(21) Application number: 05819898.7

(22) Date of filing: 22.12.2005

(86) International application number:
**PCT/JP2005/023576**

(87) International publication number:
**WO 2006/070682 (06.07.2006 Gazette 2006/27)**

(84) Designated Contracting States:
**BE CH GB LI**

(30) Priority: **27.12.2004 JP 2004377604**

(71) Applicant: **NEC Corporation**
**Minato-ku**
**Tokyo 108-8001 (JP)**

(72) Inventor: **FURUKAWA, Jun**
**NEC Corporation**
**Minato-ku,**
**Tokyo 108-8001 (JP)**

(74) Representative: **Reeve, Nicholas Edward**
**Reddie & Grose**
**16 Theobalds Road**
**London WC1X 8PL (GB)**

(54) **LIMITED BLIND SIGNATURE SYSTEM**

(57) The present invention is aimed at the proposal of a limited blind signature system which is highly safe such that its safety can be proven without the assumption of a random oracle model. A signature presenting apparatus is supplied with a public key, a blind secret identifier, a blind public identifier, a blind signature, and a random number. A signature verifying apparatus outputs "valid" if the signature presenting apparatus is supplied with the data and otherwise outputs "invalid".

Fig. 7

DIAGRAM OF ARRANGEMENT OF LIMITED BLIND SIGNATURE SYSTEM

EP 1 838 031 A1

**Description**

Technical field:

The present invention relates to a blind signature method and apparatus for allowing a signature recipient to receive a signature to a message without the signer knowing the message that is determined by the signature recipient, and more particularly to a limited blind signature system and apparatus for limiting a signature that can be received by a signature recipient to a message related to a public identifier of the signature recipient.

Background art:

[Related art 1]

One related example of a limited blind signature is a process described in Non-patent Document 1 ("Untraceable Off-line Cash in Wallets with Observers (Extended Abstract)" Advances in Cryptology, Proceedings Crypto '93, Lecture Note on Computer Science 773, D. Stinson, Ed., Springer-Verlag, 1994 pp.302-318).
The above process will briefly be described below. A limited blind signature employs three apparatus, i.e., a signature apparatus used by a signer, a signature receiving apparatus used by a signature recipient, and a signature verifying apparatus for verifying a signature presented by the signature recipient. It is assumed below that p and q represent prime numbers satisfying $q|p-1$, and $G_q$ a set of elements of the order q of a field $(Z/pZ)^*$.
It is also assumed that g, g[1], and g[2] represent elements of $G_q$, u[1] elements of Z/qZ, $I=g[1]^{u[1]}$ mod p an identifier, made open to public, of the signature receiving apparatus, x elements of Z/qZ and a secret key of the signer, $h=g^x$ mod p a public key of the signer, and Hash a cryptologic hash function.
The signature receiving apparatus receives a limited blind signature from the signature apparatus according to the following process:

The signature apparatus calculates

$$z = (Ig[2])^x \bmod p$$

and sends it to the signal receiving apparatus.
The signature apparatus randomly selects w from Zq, calculates

$$a = g^w \bmod p$$

$$b = (Ig[2])^w \bmod p$$

and sends a, b to the signal receiving apparatus.
The signal receiving apparatus randomly selects s, x[1], x[2], u, and v from Z/qZ, calculates

$$A = (Ig[2])^s \bmod p$$

$$z' = z^s \bmod p$$

$$B = g[1]^{x[1]}g[2]^{x[2]} \bmod p$$

$$a' = a^u g^v$$

$$b' = b^{su} A^v \bmod p$$

$$c' = Hash(A,B,z',a',b')$$

$$c = c'/u \bmod q$$

and sends c to the signature apparatus.
The signature apparatus calculates

$$r = c\, x^+ w \bmod q$$

and sends r to the signature receiving apparatus.
The signature receiving apparatus confirms that

$$^r = h^c\, a \bmod p$$

$$\lg[2])^r = z^c\, b \bmod p$$

are satisfied. If they are not satisfied, then the signature receiving apparatus judges that it has failed to receive a valid signature, and the process goes to an end. If they are satisfied, then the signature receiving apparatus determines

$$r' = r u^+ v \bmod q$$

and regards (A,B,z',a',b',r') as a limited blind signature.
Operation of the signature verifying apparatus is shown below.
The signature verifying apparatus calculates

$$c' = Hash(A,B,z',a',b',r')$$

and checks if the following relationships are satisfied:

$$g^r = h^c a' \bmod p$$

$$A^r = z'^{c'} b' \bmod p$$

If both equations are satisfied, then the signature verifying apparatus regards the limited blind signature as valid. Otherwise, the signature verifying apparatus regards the limited blind signature as ilvalid.

Features of the limited blind signature will be described below.

(A,B,z',a',b',r'), which satisfies the relationships that the signature verifying apparatus confirms, represents a set of values which cannot be calculated in the absence of the secret key x of the signature apparatus. Such a set can be considered to mean that the signature apparatus has given some degree of approval. In this sense, the present process is a type of signature procedure.

The signature apparatus is unable to obtain (A,B,z',a',b',r') in the above signature procedure. Even if the signature apparatus obtains (A,B,z',a',b',r'), the signature apparatus cannot determine what it is that the signature receiving apparatus has obtained in the signature procedure with respect to I. In this sense, the present signature procedure is a type of blind signature.

(A,z') satisfies

$$z' = A^x \bmod p$$

In the sense that the signature recipient can only obtain (A,B,z',a',b',r') which satisfies such a relationship through communications with the signer, the blind signature is referred to as a limited blind signature.

A useful application of the limited blind signature is off-line anonymous electronic cash.

According to the application of this kind of technology to electronic cash, the bank keeps the signature apparatus, the identifier of a person having a bank account in the bank is represented by I, and the person debits electronic cash (A,B,z',a',b',r'). At this time, the person debits a corresponding amount of money from the bank account of I. When I uses the electronic cash, it gives (A,B,z',a',b',r') to the other party. Since electronic cash can not be obtained without the approval of the bank, the recipient can regard the electronic cash genuine. The recipient carries it to the bank, and can receive the corresponding amount of money. At this time, since the electronic cash is a blind signature, the association between I and the electronic cash is not known to the bank, and hence the payment remains anonymous. On the other hand, as the electronic cash is represented simply by data, it can easily be used twice. However, if the electronic cash is used twice, since there is a limitation in which the electronic cash and I are associated with each other, I can be identified when I uses the electronic cash twice. This property is effective to prevent I from using the electronic cash twice. Though not described above, the above payment procedure is not only a simple exchange of data, but employs a special protocol to reveal the relationship between the electronic cash and I if I uses the electronic cash twice.

The above related art is known to be safe based on the assumption of a random oracle model. The random oracle model represents an assumption that the above hash function is a function for returning a true random number.

[Related art 2 (group signature)]

A group signature system is a system wherein a group comprises a plurality of members and a certain user belonging to the group generates a signature and confirms the signature. The signature can verify that the signer is a member of the group, but is normally unable to identify which member of the group is the signer. However, the group signature system includes, as a precaution, a function to identify (hereinafter referred to as trace) the actual signer from the signature.

Generally, the group signature system includes an entity called a group administrator which is present in the group for registering a new member in the group and tracing a signer. In the group signature system, members are registered in the group and signers of group signatures are all traced under the authority of the group administrator.

Non-patent Document 2 (G. Ateniese, J. Camenisch, M. Joye and G. Tsudik, "A Practical and Provable Secure Coalition-Resistant Group Signature Scheme", In Advances in Cryptology - CRYPT02000, LNCS 1880, pp.255-270, Springer-Verlag, 2000) describes a first related group signature system having a public information disclosing means and a signature apparatus.

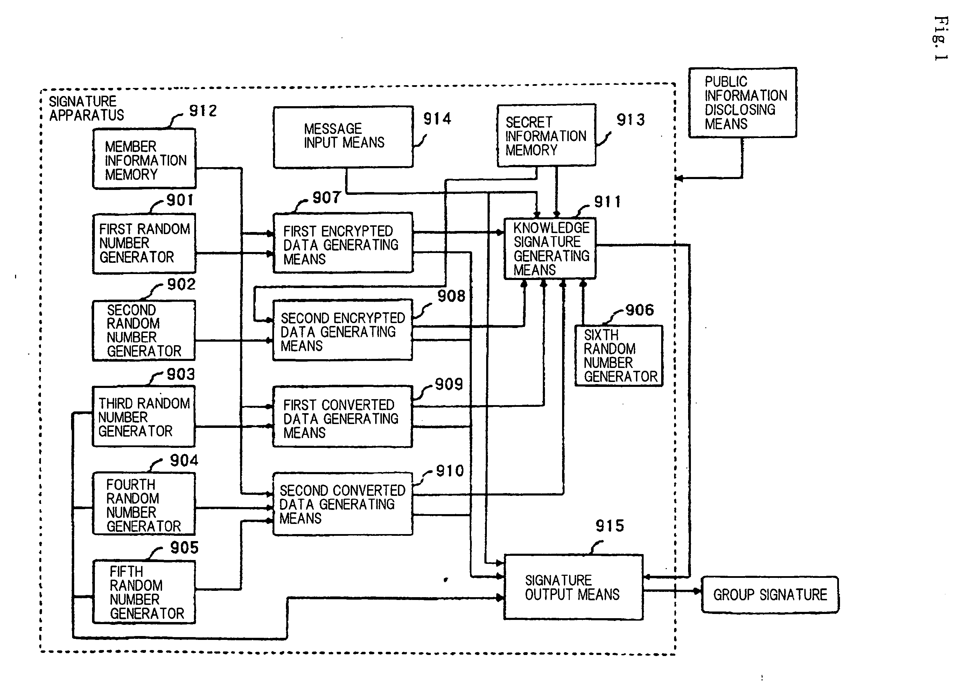

Fig. 1 is a block diagram showing an arrangement of a signature apparatus in a group signature system according to the technology disclosed in Non-patent Document 2. As shown in Fig. 1, the signature apparatus comprises first random number generator 901, second random number generator 902, third random number generator 903, fourth random number generator 904, fifth random number generator 905, sixth random number generator 906, first encrypted data generating means 907, second encrypted data generating means 908, first converted data generating means 909, second converted data generating means 910, knowledge signature generating means 911, member information memory 912, secret information memory 913, message input means 914, and signature output means 915.

First random number generator 901 generates a random number to be used by first encrypted data generating means 907.

Second random number generator 902 generates a random number to be used by second encrypted data generating means 908.

Third random number generator 903 generates a random number to be used by first converted data generating means 909 and outputs the random number as an element of a group signature to signature output means 915.

Fourth random number generator 904 generates a random number to be used by second converted data generating means 910 and outputs the random number as an element of a group signature to signature output means 915.

Fifth random number generator 905 generates a random number to be used by second converted data generating means 910 and outputs the random number as an element of a group signature to signature output means 915.

Sixth random number generator 906 generates a random number to be used by knowledge signature generating means 911.

First encrypted data generating means 907 is supplied with the random number generated by first random number generator 901 and a first element of a member certificate stored in member information memory 912, and outputs encrypted data of the first element of the member certificate (hereinafter referred to as first encrypted data) to knowledge signature generating means 911 and signature output means 915.

Second encrypted data generating means 908 is supplied with the random number generated by second random number generator 902 and converted data of a signature key stored in secret information memory 913, and outputs encrypted data of a first element of the converted data of the signature key (hereinafter referred to as second encrypted data) to knowledge signature generating means 911 and signature output means 915.

First converted data generating means 909 is supplied with the random number generated by third random number generator 903 and the first element of the member certificate stored in member information memory 912, and outputs converted data of the first element of the member certificate (hereinafter referred to as first converted data) to knowledge signature generating means 911 and signature output means 915.

Second converted data generating means 910 is supplied with random numbers generated by fourth random number generator 904 and fifth random number generator 905, and the first element of the member certificate stored in member information memory 912, and outputs converted data of the first element of the member certificate (hereinafter referred to as second converted data) to knowledge signature generating means 911 and signature output means 915.

Knowledge signature generating means 911 is supplied with a message entered from message input means 914, the random number generated by sixth random number generator 906, the first encrypted data, the second encrypted data, the first converted data, the second converted data, the first and second elements of the member certificate, and the signature key, and outputs knowledge signature data capable of proving that the member certificate and the signature key are properly owned, without leakage of the information about the member certificate and the signature key.

Member information memory 912 stores a member certificate for issuing a group signature. The member certificate comprises a first element and a second element.

Secret information memory 913 stores a signature key.

Message input means 914 enters a message to which a signature is to be added.

Signature output means 915 outputs the message, the first encrypted data, the second encrypted data, the first converted data, the second converted data, the third random number, the fourth random number, the fifth random number, and the knowledge signature data as a group signature.

With the above arrangement, the first related group signature system can generate a group signature. -

According to the above technology, since a hash function is used, process safety can be proved only under the random oracle model. If the hash function is replaced with a specific function in a cryptographic system whose safety can only be assured based upon the random oracle model, then the system will never be safe now matter how good the properties of the hash function may be, as disclosed in Non-patent Document 3 (Ran Ganetti, Oded Goldreich, Shai Halevi: The Random Oracle Methodology, Revisited (Preliminary Version), STOC 1998: 209-218).

Non-patent Document 1: "Untraceable Off-line Cash in Wallets with Observers (Extended Abstract)" Advances in Cryptology, Proceedings Crypto '93, Lecture Note on Computer Science 773, D. Stinson, Ed., Springer-Verlag, 1994 pp.302-318;

Non-patent Document 2: G. Ateniese, J. Camenisch, M. Joye and G. Tsudik, "A Practical and Provable Secure Coalition-Resistant Group Signature Scheme", In Advances in Cryptology - CRYPT02000, LNCS 1880, pp.255-270, Springer-Verlag, 2000;

Non-patent Document 3: Ran Ganetti, Oded Goldreich, Shai Halevi: The Random Oracle Methodology, Revisited (Preliminary Version), STOC 1998: 209-218

Disclosure of the invention:

Problems to be solved by the invention:

The problem of the related art is that since a hash function is used, process safety can be proved only under the random oracle model. It is known that if the hash function is replaced with a specific function in a cryptographic system whose safety can only be assured based upon the random oracle model, then the system will never be safe now matter how good the properties of the hash function may be. In other words, according to the cryptographic system whose safety can only be assured based upon the random oracle model, solving the safety of a cryptograph is not essentially a difficult problem, that is thought to be hard to solve. This leads to a conclusion that the grounds for safety given to the related processes are weak. Therefore, it is possible for electronic cash according to the related art, for example, to be falsified and also to be duplicated and used in large quantities by users who remain unknown.

It is an object of the present invention to provide a limited blind signature system which is highly safe such that its safety can be proven without the assumptions of a random oracle model.

Means for solving the problems:

A limited blind signature system according to the present invention comprises a signature receiving apparatus, a signature apparatus for communicating with the signature receiving apparatus, a signature presenting apparatus for being supplied with output from the signature receiving apparatus, and a signature verifying apparatus for communicating with the signature presenting apparatus, wherein

said signature apparatus is supplied with a secret key which represents secret data, a public key, and a random number, and outputs a first blind signature from the random number to said signature receiving apparatus;

said signature receiving apparatus is supplied with a public key of said signature apparatus, a secret identifier which represents secret data, a public identifier which is public data depending on said secret identifier, and a random number, generates a blind factor which represents secret data from said random number, generates a blind secret identifier calculated from said secret identifier and said blind factor, generates a blind public identifier which is data depending on said blind secret identifier, outputs a second blind signature which is a group signature in which a message is a part of a member certificate, from said first blind signature, and performs data communications, including transmission of said public identifier, with said signature apparatus;

said signature presenting apparatus is supplied with said public key, said blind secret identifier, said blind public identifier, said second blind signature, and a random number, and outputs a signal indicative of a supplied state thereof to said signature verifying apparatus; and

said signature verifying apparatus is supplied with said public key and a random number, and outputs "valid" if the signal from said signature presenting apparatus indicates that said signature presenting apparatus is supplied with data of said blind public identifier, said blind secret identifier, and said second blind signature, and otherwise outputs "invalid".

A signature receiving apparatus according to the present invention is included in the above limited blind signature system, wherein said second blind signature comprises a group signature generated by a secret key corresponding to said public key.

A signature apparatus according to the present invention is included in the above limited blind signature system, and comprises communicating means for acquiring a commitment of a blind secret identifier which represents data calculated from the public identifier, the secret identifier, and the blind factor generated from the random number, of the signature receiving apparatus, wherein a first blind signature which is a signature for the blind secret identifier that is data committed by the blind commitment is generated as a group signature generated by said secret key.

The above signature receiving apparatus may comprise:

a blind secret identifier generating apparatus for being supplied with said secret identifier and said random number, for generating a blind factor from said random number, generating a blind secret identifier from said blind factor and said secret identifier, and outputting the blind secret identifier;

a blind commitment generating apparatus for being supplied with said public key, said blind secret identifier, and said random number, for generating a blind commitment which is a commitment of said blind secret identifier, and sending the blind commitment to the signature apparatus;

a public identifier transmitting apparatus for sending said public identifier to the signature apparatus;

a blind commitment proving apparatus for being supplied with said blind secret identifier and said random number and for communicating with the signature apparatus for proving, to the signature apparatus, the knowledge that said blind commitment is the commitment of said blind secret identifier; and

a blind signature receiving apparatus for receiving a first blind signature which is a group signature for said blind secret identifier committed by said blind commitment, from said signature apparatus, and for verifying and outputting said signature.

The above signature apparatus may comprise:

a public identifier receiving apparatus for receiving the public identifier of the signature receiving apparatus by communicating with the signature receiving apparatus;

a blind commitment verifying apparatus for receiving a blind commitment which is a commitment of the signature receiving apparatus, being supplied with the public identifier, the blind commitment, the public key, and the random number of said signature apparatus, for communicating with the signature receiving apparatus to verify, if a certain blind secret identifier exists which is calculated from the secret identifier which is the data on which said public identifier depends and from the blind factor generated from the random number, the proof of the knowledge that said blind commitment is the commitment of the blind secret identifier, outputting "valid" if the proof is recognized as valid, and otherwise outputting "invalid"; and

a group signature generating apparatus for being supplied with said secret key, the public key, said blind commitment, and the random number, for generating a group signature for the blind secret identifier committed by said blind commitment if said blind commitment verifying apparatus outputs "valid", and sending the group signature to the signature receiving apparatus.

A signature presenting apparatus according to the present invention is included in the above limited blind signature system, and comprises a knowledge proving apparatus for:

sending said blind public identifier to said signature verifying apparatus;

being supplied with the public key of the signature apparatus, the blind secret identifier, the blind secret identifier, and the group signature referred to as the second blind signature for the blind secret identifier, output from the signature receiving apparatus;

communicating with the signature verifying apparatus to prove that a certain blind secret identifier exists and that said blind public identifier is data, depending on the blind secret identifier, and to prove that the second blind signature which is the group signature, exist for the blind secret identifier.

A signature verifying apparatus according to the present invention is included in the above limited blind signature system, and comprises a knowledge proof verifying apparatus for receiving data referred to as the blind public identifier from said signature presenting apparatus, for being supplied with the public key and the random number, and for communicating with the signature presenting apparatus that a certain blind secret identifier exists and that said blind public identifier is data, depending on the blind secret identifier, and to prove that the second blind signature, which is the group signature for the blind secret identifier.

In the above signature receiving apparatus, said blind commitment proving apparatus may comprise a proof commitment apparatus, a challenge value acquiring apparatus, and a proof response apparatus, wherein said proof commitment apparatus may generate a proof commitment which is a commitment of a random number, said challenge value acquiring apparatus may send a proof commitment to the signature apparatus and receives a challenge value from the signature apparatus, and said proof response apparatus may generate a proof response from the random number used to generate said proof commitment, said blind secret identifier, and said blind factor.

In the above signature apparatus, said blind commitment verifying apparatus may comprise a challenge value generating apparatus and a proof verifying apparatus, wherein said challenge value generating apparatus may wait for data referred to as a commitment of proof to be received, generate a challenge value which is a random number using said random number when the data is received, and send the challenge value to the signature receiving apparatus, and said signature verifying apparatus may wait for data referred to as a response of proof to be received from the signature receiving apparatus, and output "valid" or "invalid" depending on whether said commitment of proof, said challenge value, and said response of proof satisfy a certain verifying formula or not when the data is received.

In the above signature presenting apparatus, said challenge value acquiring apparatus may be supplied with the public key and the blind public identifier in addition to the commitment of proof, and output a hash value of data including said commitment of proof, said public key, and said blind public identifier as the challenge value.

In the above signature verifying apparatus, said challenge value generating apparatus may output a hash value of data including said commitment of proof, said public key, and said blind public identifier as the challenge value.

A limited blind signature system according to another embodiment of the present invention comprises a signature receiving apparatus, a signature apparatus for communicating with the signature receiving apparatus, a signature presenting apparatus for being supplied with output from the signature receiving apparatus, and a signature verifying apparatus for communicating with the signature presenting apparatus, wherein

said signature apparatus is supplied with a secret key which represents secret data, a public key, and a random number, and outputs a first blind signature from the random number to said signature receiving apparatus;

said signature receiving apparatus is supplied with a public key of said signature apparatus, a message, a random number, and said first blind signature, and outputs a second blind signature which is a group signature in which said message is a part of a member certificate;

said signature presenting apparatus is supplied with said public key, said message, said second blind signature output from said signature receiving apparatus, and a random number, and outputs a signal indicative of a supplied state thereof to said signature verifying apparatus; and

said signature verifying apparatus is supplied with said public key and a random number, and outputs "valid" if the signal from said signature presenting apparatus indicates that said signature presenting apparatus is supplied with said message and said second blind signature, and outputs "invalid" otherwise.

A signature receiving apparatus according to another embodiment of the present invention is included in the limited blind signature system according to the above other embodiment, and transmits a blind commitment which is a commitment of said message to the signature apparatus.

A signature apparatus according to another embodiment of the present invention is included in the limited blind signature system according to the above other embodiment, and is supplied with a blind commitment which is a commitment of said message, generates the first blind signature which is a signature for the message which is data committed by said blind commitment and which is a group signature generated by said secret key and which includes said message in a member certificate, and sends the first blind signature to the signature receiving apparatus.

The signature receiving apparatus according to the other embodiment may comprise:

a blind commitment generating apparatus for being supplied with said public key, said message, and said random number, for generating a blind commitment which is a commitment of said message, and for sending the blind commitment to the signature apparatus;

a proof commitment apparatus for being supplied with said message, said public key, and said random number and for communicating with the signature apparatus for proving, to the signature apparatus, the knowledge that said blind commitment is the commitment of said message; and

a blind signature receiving apparatus for receiving the first blind signature which is committed by said blind commitment, from said signature apparatus, for verifying the first blind signature, and for outputting the second blind signature.

The signature apparatus according to the other embodiment may comprise:

a proof verifying apparatus for being supplied with the public key, the random number, and a blind commitment sent from said signature receiving apparatus, for verifying the proof of the knowledge that said blind commitment is the commitment of said message, for outputting "valid" if the proven result is recognized as valid, and otherwise for outputting "invalid"; and

a group signature generating apparatus for being supplied with said secret key, the public key, said blind commitment, and the random number, for generating a group signature including the message committed by said blind commitment as the member certificate if said proof verifying apparatus outputs "valid", and for sending the group signature to the signature receiving apparatus.

17. A signature verifying apparatus according to another embodiment of the present invention is included in the limited blind signature system according to the above other embodiment, and comprises:

a knowledge proving apparatus for sending said message to said signature verifying apparatus and holding the knowledge of a member proof with respect to a group signature which includes the message in the member certificate.

A signature verifying apparatus according to another embodiment of the present invention is included in the limited blind signature system according to the above other embodiment, and comprises:

a knowledge verifying apparatus for receiving the message from said signature presenting apparatus and verifying that said signature presenting apparatus is holding the knowledge of a member proof of a group signature which includes the message in the member certificate.

Any one of the above signature receiving apparatuses may initially receive, from the signature apparatus, an ElGamal encrypted text of a value produced by having a part of the data included in said group signature act on said public key, in communications with the signature apparatus.

Any one of the above signature apparatuses may initially send, to the signature receiving apparatus, an ElGamal encrypted text of a value produced by having a part of the data included in said group signature act on said public key, in communications with the signature receiving apparatus. Advantages of the invention:

According to the present invention, since a limited blind signature that is received by the signature receiving apparatus is proven to be safe, without depending on a random oracle model, the possibility that an unauthorized receiving apparatus will obtain a signature without the assistance of the signature apparatus is very low. If there is exist an unauthorized receiving apparatus that can obtain a signature without the permission of the signature apparatus, then the strong RSA problem or the discrete logarithm problem or the like can be solved by using the receiving apparatus. The safety of many present public key encryption systems depends on these problems. The impact deriving from the existence of the above described unauthorized receiving apparatus would be to make most current public key encryption systems useless, and it is rare for such an incident to happen.

Brief description of the drawings:

Fig. 1 is a block diagram showing an arrangement of a signature apparatus in a related group signature system;

Fig. 2 is a block diagram showing an arrangement of a signature receiving apparatus according to a first embodiment of the present invention;

Fig. 3 is a block diagram showing an arrangement of a signature apparatus according to a second embodiment of the present invention;

Fig. 4 is a block diagram showing an arrangement of a signature presenting apparatus according to a third embodiment of the present invention;

Fig. 5 is a block diagram showing an arrangement of a signature verifying apparatus according to a fourth embodiment of the present invention;

Fig. 6 is a block diagram showing an arrangement of a challenge value acquiring apparatus according to a fifth embodiment of the present invention;

Fig. 7 is a block diagram showing an arrangement of a system comprising a signature receiving apparatus, a signature apparatus, a signature presenting apparatus, and a signature verifying apparatus according to a seventh embodiment of the present invention;

Fig. 8 is a block diagram showing an arrangement of a signature receiving apparatus according to an eighth embodiment of the present invention;

Fig. 9 is a block diagram showing an arrangement of a signature apparatus according to a ninth embodiment of the present invention;

Fig. 10 is a block diagram showing an arrangement of a signature presenting apparatus according to a tenth embodiment of the present invention;

Fig. 11 is a block diagram showing an arrangement of a signature verifying apparatus according to an eleventh embodiment of the present invention;

Fig. 12 is a block diagram showing an arrangement of a signature receiving apparatus according to a twelfth embodiment of the present invention;

Fig. 13 is a block diagram showing an arrangement of a signature apparatus according to a thirteenth embodiment of the present invention;

Fig. 14 is a block diagram showing an arrangement of a signature receiving apparatus according to a fourteenth embodiment of the present invention; and

Fig. 15 is a block diagram showing an arrangement of a signature apparatus according to a fifteenth embodiment of the present invention. Description of reference characters:

100 signature receiving apparatus
101 public key
102 secret identifier
103 public identifier
104 random number
105 blind identifier generating apparatus
106 blind factor
107 blind secret identifier
108 blind commitment apparatus

109 blind commitment
110 proof commitment
111 commitment of proof
112 challenge value
113 challenge value acquiring apparatus
114 proof response apparatus
115 response of proof
116 blind signature
117 blind public identifier
118 public identifier transmitting apparatus
200 signature apparatus
201 secret key
202 random number
203 challenge value generating apparatus
205 proof verifying apparatus
206 verified result
207 group signature generating apparatus
208 public identifier receiving apparatus
209 blind commitment receiving apparatus
300 signature presenting apparatus
301 random number
302 proof commitment apparatus
303 commitment of proof
304 challenge value acquiring apparatus
305 challenge value
306 proof response generating apparatus
307 response of proof
400 signature verifying apparatus
401 random number
402 challenge value generating apparatus
403 proof verifying apparatus
404 verified result

Best mode for carrying out the invention:

Embodiments of the present invention will be described in detail with reference to the drawings.
First, premises of the present invention will be described below.

L=(Lm,Ls,Lc,Le,Lq,Ln,Lp,LE) represents a string of variables serving as a measure of safety. If it uses values (380,60,160,60,160,2048,1600,382), for example, then it indicates that essential safety is provided at present. These values need to be greater as computer performance increases.

p and q represent prime numbers satisfying q|p-1, and Gq a partial group of the order q of a multiplicative group (Z/pZ)*.

A signature receiving apparatus stores two data, i.e., a secret identifier which is an identifier that is secret and a public identifier which is an identifier that is open to public.

m and n represent integers, B[j] relative to j=1,···,m represent elements of Gq that are uniformly selected at random, and p,q,m,n,B[j] represent elements defining forms of the above identifiers, and are referred to as domain variables and denoted as Dom.

Specifically, the secret identifier of the signature receiving apparatus is an n x m matrix randomly generated on the field Z/qZ, i.e.,

$$a[ij] \in Z/qZ \; ; \; i=1,...,n; \; j=1,....,m$$

and is referred to as Sid. The public identifier is D[j] relative to i=i,···,n, represented by

$$D[i] = \Pi_{j=1}{}^{m}B[j]^{a[ij]} \bmod p \qquad \cdots(1)$$

This is referred to as Pid.

The signature apparatus stores two data, i.e., a secret key and a public key. P,Q,P',Q' are four randomly generated prime numbers which satisfy the relationships P=2P'+1, Q=2Q'+1, and are integral numbers where n=PQ. With respect to i=1,···,n;j=1,···,m, A,H,G[ij] are elements uniformly selected at random from (Z/nZ)*.

The secret key is (P,Q) and is referred to as Skey.

The public key is a domain variable Dom and A,H,G[ij]: i=1,···,n;j=1,···,m, and is referred to as Pkey.

An apparatus according to embodiments of the present invention will be described below.

[Embodiment 1]

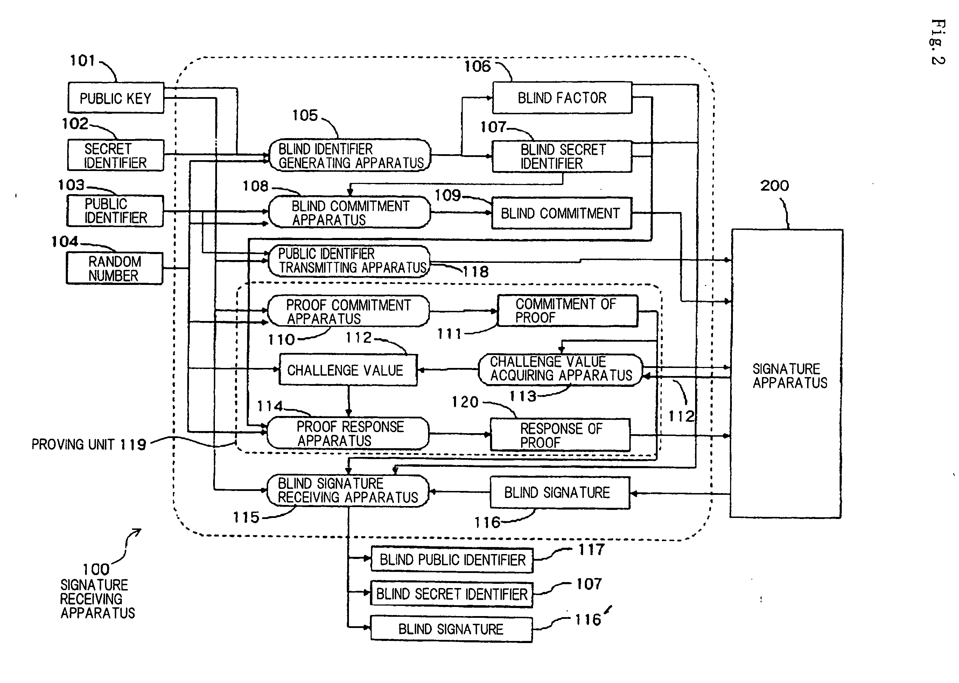

Fig. 2 is a block diagram showing an arrangement of signature receiving apparatus 100 according to a first embodiment of the present invention.

Signature receiving apparatus 100 sends data to and receives data from signature apparatus 200, is supplied with public key 101, secret identifier 102, public identifier 103, and random number 104, and outputs blind public identifier 117, blind secret identifier 107, and blind signature 116'. Signature receiving apparatus 100 comprises blind identifier generating apparatus 105, blind factor 106, blind secret identifier 107, blind commitment apparatus 108, blind commitment 109, proof commitment apparatus 110, commitment of proof 111, challenge value 112, challenge value acquiring apparatus 113, proof response apparatus 114, blind signature receiving apparatus 115, blind signature 116, public identifier transmitting apparatus 118, and response of proof 120.

Signature receiving apparatus 100 is implemented by a general computer system comprising an input device, an output device, a memory device, and a control device. Blind factor 106, blind secret identifier 107, blind commitment 109, commitment of proof 111, challenge value 112, response of proof 115, and blind signature 116 are set in the memory device. Other devices are virtually established in the computer system. Of the above components, commitment of proof 111, challenge value 112, challenge value acquiring apparatus 113, proof response apparatus 114, and response of proof 120 make up proving unit 119.

Signature receiving apparatus 100 is supplied with
public key 101 of the signature apparatus: Pkey=(Dom,n, A,H,G[ij]:i=1,···,n;j=1,···,m, where Dom=(p,q,m,n,B[j]:j=1,···,m),
secret identifier 102 of the signature receiving apparatus: Sid=(a[ij]∈ Z/qZ:i=1,···,n;j=1,···,m,
public identifier 103 of the signature receiving apparatus: Pid=(D[i]:i=1,···,n), and
random number 104.

Blind identifier generating apparatus 105 of signature receiving apparatus 100 randomly generates an integral number s∈ Z/qZ from input random number 104, regards the integral number as blind factor 106, and calculates blind secret identifier 107

$$b[ij] = s\,a[ij] \bmod q \quad i=1,\cdots,n;j=1,\cdots,m$$

$$\cdots(2)$$

Blind commitment apparatus 108 of signature receiving apparatus 100 randomly generates an integral number r'∈{0,1}$^{Ln/2}$ from input random number 104, calculates blind commitment 109, which is the commitment of the blind secret identifier,

$$H' = H^{r}\Pi_{j=1}{}^{n}\Pi_{j=1}{}^{m} G[ij]^{a'[ij]} \bmod n \qquad \cdots(3)$$

and sends it to signature apparatus 200.

Public identifier transmitting apparatus 118 of signature receiving apparatus 100 sends public identifier 103 of signature receiving apparatus 100 to signature apparatus 200, and communicates with signature apparatus 200 for thereby enabling proving unit 119 to prove the knowledge s,r',a[ij]:i=1,···,n;j=1,···,m which satisfies the equation (1), the equation (2), and
a[ij] ∈{0,1}$^{1Lq+Lc+Lc}$:i=1,···,n;j=1,···,m, as follows:

[Start of the proving procedure]

Signature receiving apparatus 10 randomly generates, from input random number 104,

$$t[i] \in Z/qZ: i=1,\cdots,n$$

$$t'[i] \in Z/qZ: i=1,\cdots,n$$

$$s' \in Z/qZ$$

$$b'[ij] \in \{0,1\}^{Lq+Lc+Ls}: i=1,\cdots,n; j=1,\cdots,m$$

$$u \in \{0,1\}^{Ln/2+Lc+Ls}$$

Using proof commitment apparatus 110, signature receiving apparatus 10 calculates,

$$F[i] = D[i]^s H^{t[i]} \bmod p \ i=1,\cdots,n$$

$$F'[i] = D[i]^{s'} H^{t'[i]} \bmod p \ i=1,\cdots,n$$

$$F''[i] = H^{t'[i]} \Pi_{j=1}{}^{m} B[j]^{b'[ij]} \bmod p \ i=1,\cdots,n$$

$$H'' = H^u \Pi_{j=1}{}^{n} \Pi_{j=1}{}^{m} G[ij]^{b'[ij]} \bmod n$$

and sends F[i]:i=1,···,n,F'[i]:i=1,···,n,F''[i]:i=1,···,n,H'' as commitment of proof 111 to signature apparatus 200.
Signature receiving apparatus 100 waits for challenge value 112 of proof $c \in \{0,1\}^{Lc}$ to be sent from signature apparatus 200 to challenge value acquiring apparatus 113.
When challenge value 112 of proof is received, proof response apparatus 114 of signature receiving apparatus 100 calculates

$$s'' = sc + s' \bmod q$$

$$t''[i] = t[i]c + t'[i] \bmod q \ i=1,\cdots,n$$

$$b''[ij] = b[ij]c + b'[ij] \quad i=1,\cdots,n; j=1,\cdots,m$$

$$u'' = r'c + u \quad i=1,\cdots,n$$

and sends s'',t''[i]:i=1,$\cdots$,n, b''[ij]:i=1,$\cdots$n;j=1,$\cdots$,m, u' as response of proof 115 to signature apparatus 200.

[End of the proving procedure]

Blind signature receiving apparatus 115 of signature receiving apparatus 100 waits until blind signature 116 Cer=(Y,E,r'') is sent from signature apparatus 200.

When blind signature 116 is received, blind signature receiving apparatus 115 confirms that blind signature 116 is a correct group signature of the blind secret identifier by finding that the following equations:

$$A = Y^E H'H^{r''} \bmod n$$

$$E - 2^{LE} \in \{0,1\}^{Le+Lc+Ls}$$

$$r'' \in \{0,1\}^{Ln/2}$$

are satisfied. Upon confirmation, blind signature receiving apparatus 115 generates blind public identifier 117

$$Bpid = D'[i] = D[i]^s \bmod p : i=1,\cdots,n$$

and outputs blind public identifier 117

$$Bpid = D'[i] = D[i]^s \bmod p : i=1,\cdots,n,$$

blind secret identifier 107

$$Bsid = b[ij] \quad i=1,\cdots,n; j=1,\cdots,m,$$

and blind signature 116'

$$Bcer = (Y,E,r=r'+r'')$$

[Embodiment 2]

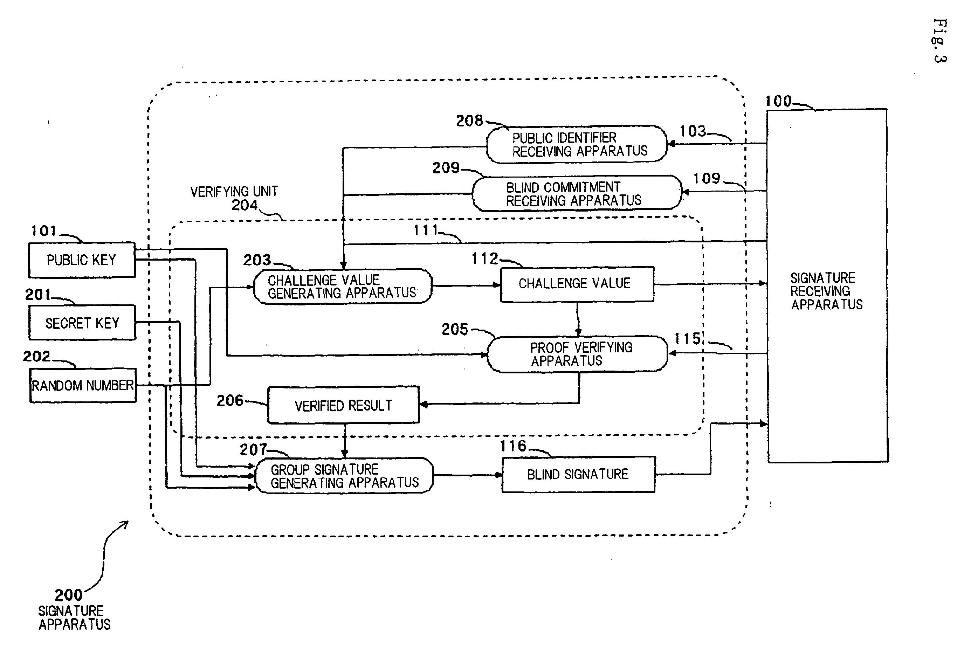

Fig. 3 is a block diagram showing an arrangement of signature apparatus 200 according to a second embodiment of the present invention.

Signature apparatus 200 is supplied with public key 101, secret key 201, and random number 202, and sends data to and receives data from signature receiving apparatus 100. Signature apparatus 200 comprises challenge value 112, blind signature 116, challenge value generating apparatus 203, proof verifying apparatus 205, verified result 206, group signature generating apparatus 207, public identifier receiving apparatus 208, and blind commitment receiving apparatus 209.

Signature apparatus 200 is implemented by a general computer system comprising an input device, an output device, a memory device, and a control device. Challenge value 112, blind signature 116, and verified result 206 are set in the memory device. Other devices are virtually established in the computer system. Of the above components, challenge value 112, challenge value generating apparatus 203, proof verifying apparatus 205, and verified result 206 make up verifying unit 204.

Signature apparatus 200 is supplied with

secret key 201; (P,Q),

public key 101: Dom n,A,H,G[ij]: i=1,···,n;j=1,···,m, where Dom=(p,q,m,n,B[j]:j=1,···,m), and

random number 202.

Public identifier receiving apparatus 208 of signature apparatus 200 waits for the reception of public identifier 103:Pid of signature receiving apparatus 100 from signature receiving apparatus 100.

Blind commitment receiving apparatus 209 of signature apparatus 200 waits the delivery of blind commitment 109 of signature receiving apparatus 100 from signature receiving apparatus 100.

When blind commitment 109 is received, signature apparatus 200 communicates with signature receiving apparatus 100 for thereby enabling verifying unit 204 to verify that signature receiving apparatus 100 has the knowledge s,r',a[ij]:i=1,···,n;j=1,···,m which satisfies the equation (1), the equation (2), and

$a[ij] \in \{0,1\}^{1Lq+Lc+Lc}$:i=1,···,n;j=1,···,m, as follows:

[Start of the verifying procedure]

Signature apparatus 200 waits for commitment of proof 111

$$F[i]:i=1,\cdots n, F'[i]:i=1,\cdots n, F''[i]:i=1,\cdots n, H''$$

to be sent from signature receiving apparatus 100. When signature apparatus 200 receives commitment of proof 111, it randomly generates

challenge value 112 of proof: $c \in \{0,1\}^{Lc}$

from the input random number, using challenge value generating apparatus 203, and sends challenge value 112 of proof to signature receiving apparatus 100.

Signature apparatus 200 waits for response of proof 115

$$s'', t''[i]:i=1,\cdots,n, b''[ij]:i=1,\cdots,n;j=1,\cdots,m, u'$$

to be sent from signature receiving apparatus 100. When signature apparatus 200 receives response of proof 115, it confirms, with proof verifying apparatus 205, that all of

$$D[i]^{s''}H^{t''[i]} = F[i]^c F'[i] \bmod p \quad i=1,\cdots,n$$

$$H^{t''[i]}\Pi_{j=1}^{m}B[j]^{b''[ij]} = F[i]^c F''[i] \bmod p \quad i=1,\cdots,n$$

$$H^{u''} \Pi_{j=1}^{n} \Pi_{j=1}^{m} G[ij]^{b''[ij]} = H'^c H'' \bmod n$$

$$b''[ij] \in \{0,1\}^{Lq+Lc+Ls} \quad i=1,\cdots,n;j=1,\cdots,m,u'$$

$$u'' \in \{0,1\}^{Ln/2+Lc+Ls}$$

are satisfied. Upon confirmation, signature apparatus 200 outputs verified result 206 representing valid.

[End of verifying procedure 204]

If verified result 206 represents valid, then the signature apparatus randomly generates, with group signature generating apparatus 207,
$e \in \{0,1\}^{Le}$ and $r'' \in \{0,1\}^{Ln/2}$ such that $E=2^{LE}+e$ will be a prime number from input random number 202.
Signature apparatus 200 calculates $Y=(A/(H'H^{r''}))^{1/E}$ mod n, sends blind signature 116: Cer=(Y,E,r'') to signature receiving apparatus 100, and ends its operation.

[Embodiments 3, 4]

A process of proving to a signature verifying apparatus that a signature presenting apparatus holds a blind signature based on communications between the signature presenting apparatus and the signature verifying apparatus will be described below.

[Embodiment 3]

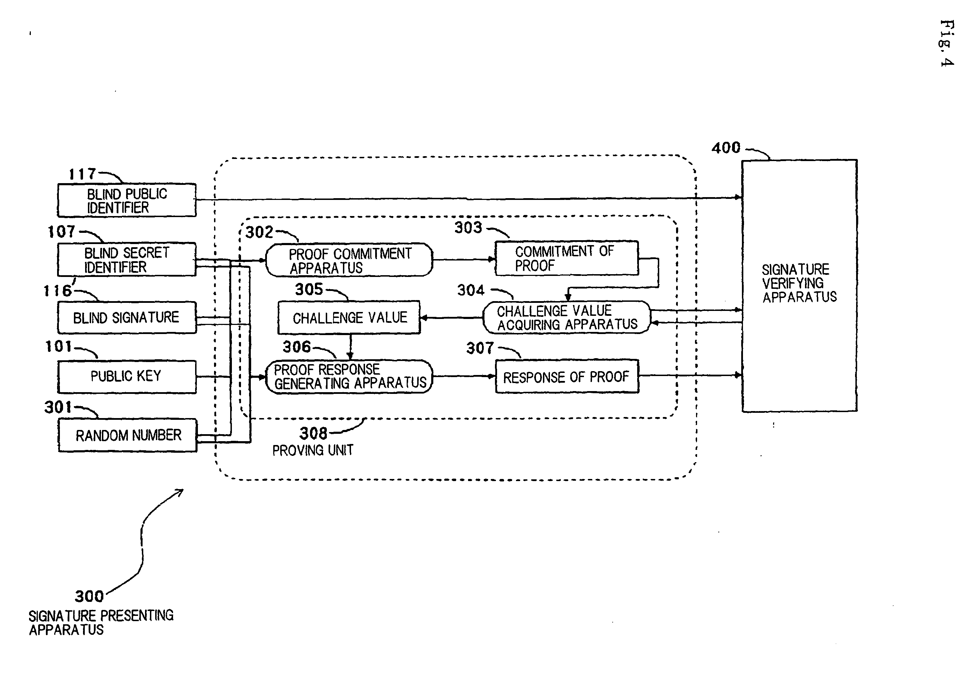

Fig. 4 is a block diagram showing an arrangement of signature presenting apparatus 300 according to a third embodiment of the present invention.
Signature presenting apparatus 300 is supplied with blind public identifier 117, blind secret identifier 107, blind signature 116', public key 101, and random number 301, and sends data to and receives data from signature verifying apparatus 400. Signature presenting apparatus 300 comprises proof commitment apparatus 302, commitment of proof 303, challenge value acquiring apparatus 304, challenge value 305, proof response generating apparatus 306, and response of proof 307.
Signature presenting apparatus 300 is implemented by a general computer system comprising an input device, an output device, a memory device, and a control device. Commitment of proof 303, challenge value 305, and response of proof 307 are set in the memory device. Other devices are virtually established in the computer system. The above components make up proving unit 308.
Signature presenting apparatus 300 is supplied with
public key 101: Dom n,A,H,G[ij]: i=1,···,n;j=1,···,m, where Dom=(p,q,m,n,B[j]:j=1,···,m),
blind public identifier 117: Bpid = D'[i] = D[i]$^s$ mod p:i=1,···,n,
blind secret identifier 107: Bsid = b[ij]i=1,···,n;j=1,···,m,
blind signature 116: Bcer = (Y,E,r), and
random number 301.
Signature presenting apparatus 300 communicates with signature verifying apparatus 400 for thereby enabling proving unit 308 to prove the knowledge

$$Y,E,r, a[ij]:i=1,\cdots,n;j=1,\cdots,m$$

which satisfies

$$D'[i] = \Pi_{j=1}{}^{m}B[j]^{b''[ij]} \bmod p \ \ i=1,\cdots,n$$

$$A = Y^{E}H^{r} \Pi_{j=1}{}^{n} \Pi_{j=1}{}^{m} G[ij]^{b[ij]} \bmod n$$

$$E- 2^{LE} \in \{0,1\}^{Le+Lc+Ls}$$

$$b[ij] \in \{0,1\}^{Lq+Lc+Ls},$$

as follows:

[Start of the proving procedure]

Signature presenting apparatus 300 randomly generates, from input random number 301,

$$t \in \{0,1\}^{Ln/2}$$

$$Le+Lc+Ls$$

$$r' \in \{0,1\}^{Ln/2+LE+Lc+Ls+2}$$

$$b'[ij] \in \{0,1\}^{Lq+Lc+Ls}.$$

Signature presenting apparatus 300 generates, with proof commitment apparatus 302,

$$U = H^t Y \bmod n$$

$$A' = U^e H^{r'} \Pi_{j=1}^n \Pi_{j=1}^m G[ij]^{b'[ij]} \bmod n$$

$$D''[i] = \Pi_{j=1}^m B[j]^{b'[ij]} \bmod p \quad i=1,\cdots,n$$

and outputs U,A' D"[i]:i=1,···,n as commitment of proof 303.

Challenge value acquiring apparatus 304 of signature presenting apparatus 300 sends commitment of proof 303 to signature verifying apparatus 400, and waits for challenge value of proof 305: $c \in \{0,1\}^{Lc}$ to be sent from signature verifying apparatus 400. When challenge value of proof 305 is received, challenge value acquiring apparatus 304 calculates, using proof response generating apparatus 306,

$$e'' = e c + e'$$

$$r'' = (r-tE)c + r'$$

$$b''[ij] = b[ij]c + b'[ij] \quad i=1,\cdots,n; j=1,\cdots,m$$

and sends e", r", b"[ij]:i=1,⋯,n;j=1,⋯,m as response of proof 307 to signature verifying apparatus 400.

[End of the proving procedure]

Thereafter, the operation is put to an end.

[Embodiment 4]

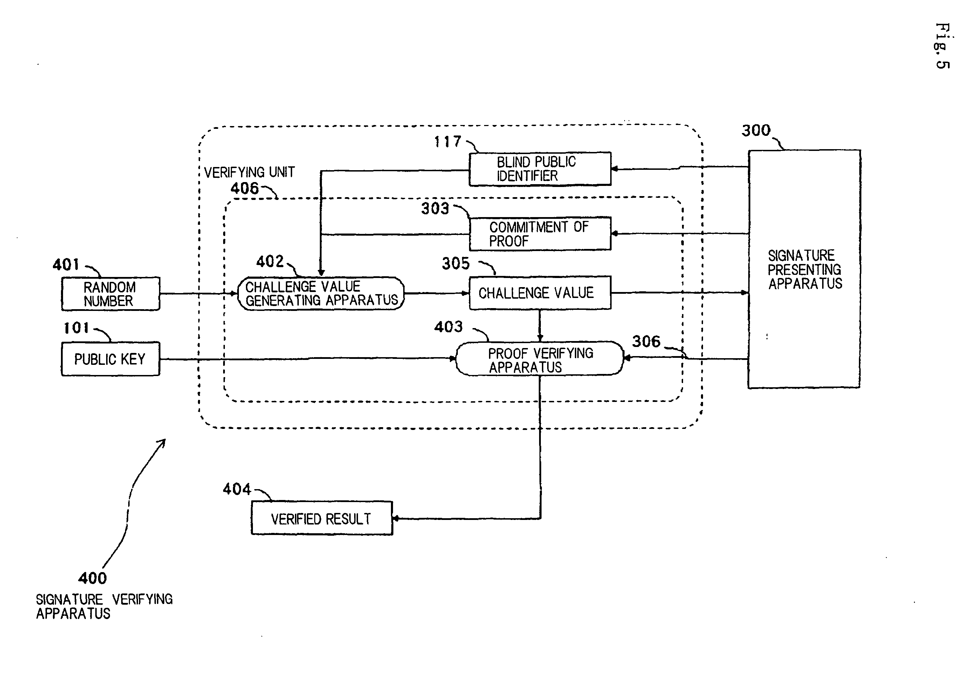

Fig. 5 is a block diagram showing an arrangement of signature verifying apparatus 400 according to the present embodiment of the present invention.

Signature verifying apparatus 400 is supplied with random number 401 and public key 101, outputs verified result 404, and sends data to and receives data from signature presenting apparatus 300. Signature verifying apparatus 400 comprises blind public identifier 117, commitment of proof 303, challenge value 305, challenge value generating apparatus 402, and proof verifying apparatus 403.

Signature verifying apparatus 400 is implemented by a general computer system comprising an input device, an output device, a memory device, and a control device. Blind public identifier 117, commitment of proof 303, and challenge value 305 are set in the memory device. Other devices are virtually established in the computer system. Commitment of proof 303, challenge value 305, challenge value generating apparatus 402, and proof verifying apparatus 403 make up verifying unit 406.

Signature verifying apparatus 400 is supplied with

public key 101: Dom n,A,H,G[ij]: i=1,⋯,n;j=1,⋯,m, where Dom=(p,q,m,n,B[j]:j=1,⋯,m), and random number 401.

Signature verifying apparatus 400 waits for blind public identifier 117:Bpid to be sent from signature presenting apparatus 300.

Signature verifying apparatus 400 communicates with signature presenting apparatus 300 for thereby enabling verifying unit 406 to verify that signature presenting apparatus 300 holds the knowledge

$$Y,E,r,\ a[ij]{:}i=1,\cdots,n; j=1,\cdots,m$$

which satisfies

$$D'[i] = \Pi_{j=1}{}^{m}B[j]^{b[ij]} \bmod p \quad i=1,\cdots,n$$

$$A = Y^{E}H^{r}\ \Pi_{j=1}{}^{n}\ \Pi_{j=1}{}^{m}\ G[ij]^{b[ij]} \bmod n$$

$$E\text{-}\ 2^{LE} \in \{0,1\}^{Le+Lc+Ls}$$

$$b[ij] \in \{0,1\}^{Lq+Lc+Ls},$$

as follows:

[Start of the verifying process]

Challenge value acquiring apparatus 402 of signature verifying apparatus 400 waits for commitment of proof 303 U,A' D"[i]:i=1,···n to be sent from signature presenting apparatus 300. When challenge value acquiring apparatus 402 receives commitment of proof 303, it randomly generates

challenge value of proof 305: $c \in \{0,1\}^{Lc}$

from input random number 401, and sends challenge value of proof 305 to signature presenting apparatus 300.

Challenge value acquiring apparatus 402 waits for response of proof 306 e", r", b"[ij]:i=1,···,n; j=1,···,m to be sent from signature presenting apparatus 300. When response of proof 306 is received, proof verifying apparatus 403 of signature verifying apparatus 400 sets

$$c' = c\, 2^{LE} + e''$$

and confirms that all of

$$U^{c'} H^{r''} \Pi_{j=1}^{n} \Pi_{j=1}^{m} G[ij]^{b''[ij]} = A^c A' \bmod n$$

$$\Pi_{j=1}^{m} B[j]^{b''[ij]} = D[i]^c D''[i] \bmod p$$

$$e'' \in \{0,1\}^{Le+Lc+Ls}$$

$$b''[i] \in \{0,1\}^{Lq+Lc+Ls} i=1,\cdots,n; j=1,\cdots,m$$

are satisfied. Upon confirmation, proof verifying apparatus 403 outputs a proof as verified result 404 representing valid.

[End of the verifying procedure]

If the proof verification is valid, then the signature presentation is regarded as valid.

[Embodiment 5]

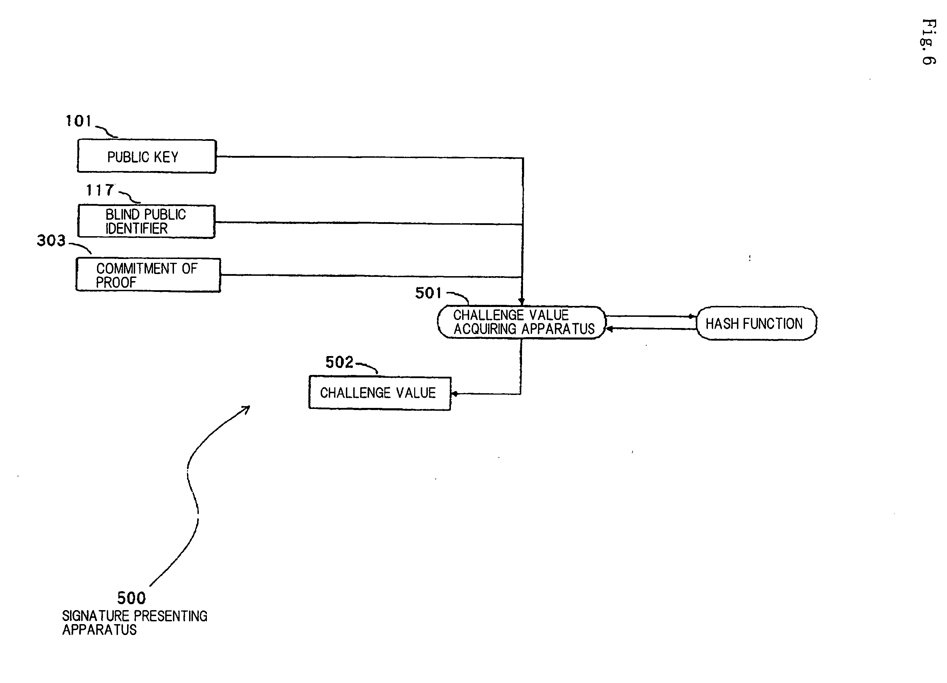

Fig. 6 is a block diagram showing an arrangement of signature presenting apparatus 500 according to an embodiment of the present invention where a challenge value acquiring function is a hash function.
Challenge value acquiring apparatus 501 output a hash value of

$$(p,q,m,n,B[j]:j=1,\cdots,m),$$

$$n,A,H,G[ij]:i=1,\cdots,n; j=1,\cdots,m$$

$$Bpid = D'[i] = D[i]^s \bmod p:i=1,\cdots,n$$

$$U,A' D''[i]:i=1,\cdots,n$$

as challenge value 502:c.

[Embodiment 6]

According to an embodiment of a signature verifying apparatus wherein a challenge value generating function is a hash function, a challenge value generating function in the signature verifying apparatus according to Embodiment 4 is the same as the challenge value generating function according to Embodiment 5.

[Embodiment 7]

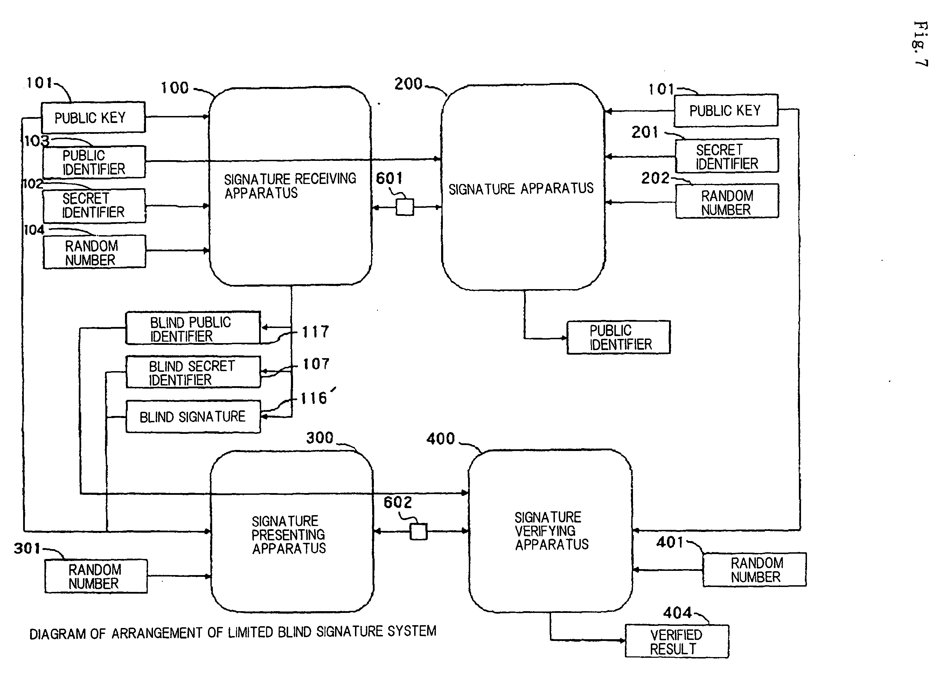

Fig. 7 is a block diagram showing an arrangement of a system comprising signature receiving apparatus 100, signature apparatus 200, signature presenting apparatus 300, and signature verifying apparatus 400 according to Embodiments 1 through 4.

The system according to the present embodiment comprises signature receiving apparatus 100, signature apparatus 200, signature presenting apparatus 300, and signature verifying apparatus 400. The system includes means 601 for allowing signature receiving apparatus 100 and signature apparatus 200 to communicate with each other. Signature presenting apparatus 300 is supplied with outputs from signature receiving apparatus 100. The system includes means 602 for allowing signature presenting apparatus 300 and signature verifying apparatus 400 to communicate with each other.

Signature receiving apparatus 100 is supplied with the public key of the signature apparatus, secret key 102 that is secret data of signature receiving apparatus 100, public identifier 103 that is public data of signature receiving apparatus 100, which depends on secret identifier 102, and random number 104.

Signature apparatus 200 is supplied with secret key 201 that represents secret data of the signature apparatus, public key 101 that represents public data of the signature apparatus, and random number 202. Signature receiving apparatus 100 and signature apparatus 200 communicate with each other, so that signature apparatus 200 outputs blind secret identifier 107, blind public identifier 117, and blind signature 116.

Signature presenting apparatus 300 is supplied with public key 101, blind secret identifier 107, blind public identifier 117, and blind signature 116 which are outputs from signature receiving apparatus 100, and is also supplied with random number 301.

Signature verifying apparatus 400 is supplied with public key 101 and random number 401. Signature presenting apparatus 300 and signature verifying apparatus 400 communicate with each other. If signature presenting apparatus 300 is supplied with data of blind public identifier 117, blind secret identifer 107, and blind signature 116, then signature verifying apparatus 400 outputs data representing "valid" as verified result 404. Otherwise, signature verifying apparatus 400 outputs data representing "invalid" as verified result 404.

Eighth through eleventh embodiments of the present invention will be described below.

L=(Ls,Lc,Le,Lq,Ln,LE) represents a string of variables serving as a measure of safety. If it uses values (60,160,60,160,2048,382), for example, then it indicates that essential safety is provided as of the year 2005. These values need to be greater as computer performance increases.

A signature receiving apparatus stores message $m \in \{0,1\}^{Lq}$.

A signature apparatus stores two data, i.e., a secret key and a public key. P,Q,P',Q' are four randomly generated prime numbers which satisfy the relationships P=2P'+1, Q=2Q'+1, and are integral numbers where N=PQ. A,H,G,F are elements uniformly selected at random from QR(N) where QR(N) represents a partial set of elements of (Z/NZ)* in which an element a of certain (Z/NZ)* exists and can be expressed as $a^2$.

The secret key is (P,Q) and is referred to as Skey.

The public key is N,A,H,G,F and is referred to as Pkey.

The individual embodiments will be described below.

[Embodiment 8]

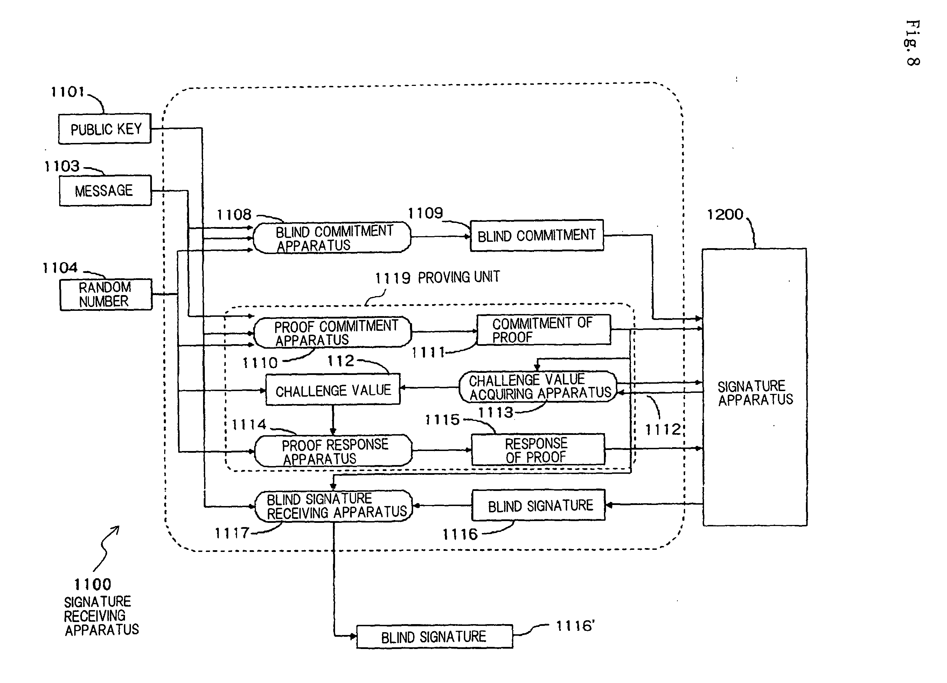

Fig. 8 is a block diagram showing an arrangement of signature receiving apparatus 1100 according to the present invention.

Signature receiving apparatus 1100 sends data to and receives data from signature apparatus 1200. Signature receiving apparatus 1100 is supplied with public key 1101, message 1103, and random number 1104, and outputs blind commitment 1109, response of proof 1115, and blind signature 1116'. Signature receiving apparatus 1100 comprises blind commitment apparatus 1108, blind commitment 1109, proof commitment apparatus 1110, commitment of proof 1111, challenge value 112, challenge value acquiring apparatus 1113, proof response apparatus 1114, response of proof 1115, blind signature receiving apparatus 1117, and blind signature 1116.

Signature receiving apparatus 1100 is implemented by a general computer system comprising an input device, an output device, a memory device, and a control device. Blind commitment 1109, challenge value 112, response of proof 1115, and blind signature 1116 are set in the memory device. Other devices are virtually established in the computer system. Of the above components, proof commitment apparatus 1110, commitment of proof 1111, challenge value 112, challenge value acquiring apparatus 1113, proof response apparatus 1114, response of proof 1115, blind signature receiving apparatus 1117, and blind signature 1116 make up proving unit 1119.

Signature receiving apparatus 1100 is supplied with

public key 1101 Pkey=(A,H,G,F) of the signature apparatus,

message 1103 m, and

random number 1104.

Blind commitment apparatus 1108 of signature receiving apparatus 1100 randomly generates an integral number r',s$\in\{0,1\}^{Ln/2}$ from the input random number, calculates blind commitment 1109

$$b[ij] = s\ a[ij]\ \mathrm{mod}\ q\ i=1,\cdots,n;j=1,\cdots,m$$

$$\cdots(2)$$

Blind commitment apparatus 108 of signature receiving apparatus 100 randomly generates an integral number r'$\square\{0,1\}^{Ln/2}$ from input random number 104, calculates blind commitment 1109, which is the commitment of the blind secret identifier,

$$H' = H^r\ G^m\ F^s\ \mathrm{mod}\ N \qquad\cdots(1)$$

and sends it to signature apparatus 1200.

Signature receiving apparatus 1100 communicates with signature apparatus 1200 for thereby proving the knowledge

m,s,r'

which satisfies

$$m,s\in\{0,1\}^{Lq+Lc+Ls}$$

$$r'\in\{0,1\}^{Ln/2+Lc+Ls},$$

as follows:

[Start of proving procedure 1119]

Signature receiving apparatus 1100 randomly generates

$$m',s'\in\{0,1\}^{Lq+Lc+Ls}:i=1,\cdots,n;j=1,\cdots,m$$

$$u\in\{0,1\}^{Ln/2+Lc+Ls}$$

Proof commitment apparatus 1110 of signature receiving apparatus 1100 calculates

$$H'' = H^u G^{m'} F^{s'}\ \mathrm{mod}\ N$$

and sends H" as commitment of proof 1111 to signature apparatus 1200.

Challenge value acquiring apparatus 1113 of signature receiving apparatus 1100 waits for challenge value of proof 1112 $c \in \{0,1\}^{Lc}$ to be sent from signature apparatus 1200.

When challenge value of proof 1112 is received, proof response apparatus 1114 of signature receiving apparatus 1100 calculates

$$s" = sc + s'$$

$$m" = mc + m'$$

$$u" = r'c + u$$

and sends s", m", u' as response of proof 1115 to signature apparatus 1200.

[End of proving procedure 1119]

Blind signature receiving apparatus 1115 of signature receiving apparatus 1100 waits for signature 1116 Cer= (Y,E,r") to be sent from signature apparatus 1200.

When signature 1116 is received, blind signature receiving apparatus 1115 confirms that it is a valid group signature by determining that the following equations:

$$A = Y^{E}H'H^{r"} \bmod N$$

$$E-2^{LE} \in \{0,1\}^{Le+Lc+Ls}$$

$$r" \in \{0,1\}^{Ln/2+Lc+Ls}$$

are satisfied.

Upon confirmation, blind signature receiving apparatus 1115 outputs blind signature 1116'

$$Bcer = (Y,E,r=r'+r",s)$$

[Embodiment 9]

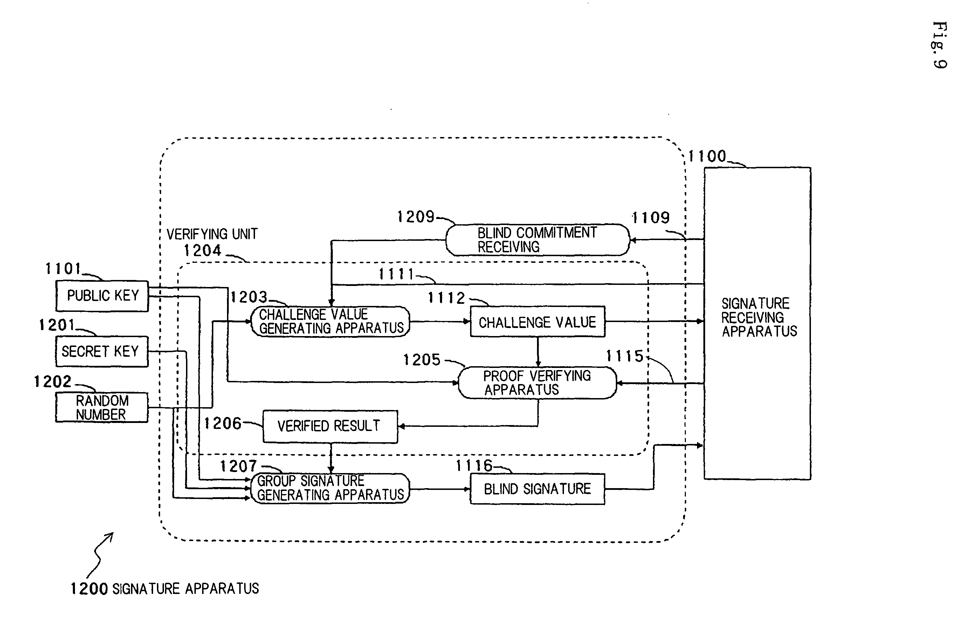

Fig. 9 is a block diagram showing an arrangement of signature apparatus 1200 according to an embodiment of the present invention.

Signature apparatus 1200 is supplied with public key 101, secret key 102, and random number 104, and sends data to and receives data from signature receiving apparatus 1100. Signature apparatus 1200 comprises challenge value 1112, blind signature 1116, change value generating apparatus 1203, proof verifying apparatus 1205, verified result 1206, group signature generating apparatus 1207, and blind commitment receiving apparatus 1209.

Signature apparatus 1200 is implemented by a general computer system comprising an input device, an output device, a memory device, and a control device. Challenge value 1112, blind signature 1116, and verified result 1206 are set in the memory device. Other devices are virtually established in the computer system. Of the above components, challenge value 1112, change value generating apparatus 1203, proof verifying apparatus 1205, and verified result 1206 make up verifying unit 1204.

Signature apparatus 1200 is supplied with
secret key 201 (P,Q),
public key 1101 N,A,H,G,F, and
random number 1202.

Blind commitment receiving apparatus 1209 of signature apparatus 1200 waits for the reception of blind commitment H' 1109 from signature receiving apparatus 1100.

Signature apparatus 1200 also waits for the delivery of commitment 1111 H" from signature receiving apparatus 1100.

When commitment 1111 H" is received, signature apparatus 1200 communicates with signature receiving apparatus 1100 for thereby verifying that signature receiving apparatus 1100 has the knowledge
m,s,r'
which satisfies the equation (1) and

$$s,m\in\{0,1\}^{Lq+Lc+Ls}:i=1,\cdots,n;j=1,\cdots,m$$

$$r'\in\{0,1\}^{Lq+Lc+Ls}:i=1,\cdots,n;j=1,\cdots,m,$$

as follows:

[Start of the verifying procedure performed by verifying unit 1204]

When challenge value generating apparatus 1203 of signature apparatus 1200 receives commitment 1111 H" from signature receiving apparatus 1100, it randomly generates

$$\text{challenge value of proof 1112 } c\in\{0,1\}^{Lc}$$

from the input random number, and sends it to signature receiving apparatus 1100.

Signature apparatus 1200 waits for response of proof 1115
s",m",u"
to be sent from signature receiving apparatus 1100. When response of proof 1115 is received, signature apparatus 1200 confirms, with proof verifying apparatus 1205, that all of

$$H^{u"} G^{m"} F^{s"} = H'^{c}H" \bmod N$$

$$m",s"\in\{0,1\}^{Lq+Lc+Ls}$$

$$u"\in\{0,1\}^{Ln/2+Lc+Ls}$$

are satisfied. Upon confirmation, signature apparatus 1200 outputs verified result 1206 representing valid.

[End of verifying procedure 1204]

If verified result 1206 represents valid, then group signature generating apparatus 1207 of signature apparatus 1200 randomly generates
$e\in\{0,1\}^{Le}$ and $r"\in\{0,1\}^{Ln/2}$ such that $E=2^{LE}+e$ will be a prime number from input random number 1202.

Signature apparatus 1200 calculates

$$Y=(A/(H'H^{r'}))^{1/E} \bmod N,$$

sends blind signature 1116 Cer=(Y,E,r") to signature receiving apparatus 1100, and ends its operation.

A process of proving to a signature verifying apparatus that a signature presenting apparatus holds a blind signature based on communications between the signature presenting apparatus and the signature verifying apparatus will be described below.

[Embodiment 10]

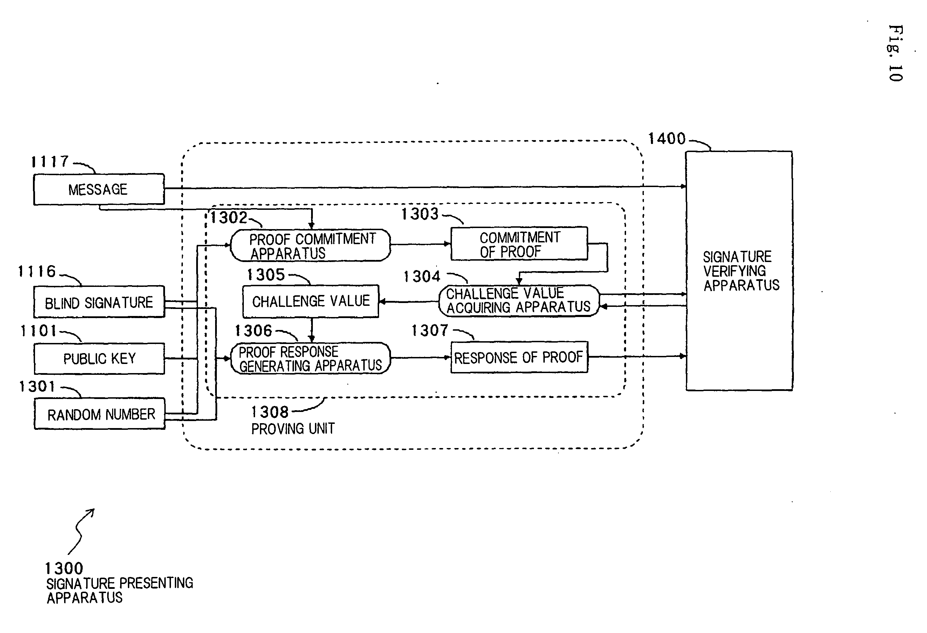

Fig. 10 is a block diagram showing an arrangement of signature presenting apparatus 1300 according to an embodiment of the present invention.

Signature presenting apparatus 1300 is supplied with public key 1101, blind signature 1116, message 1117, and random number 1301, and sends data to and receives data from signature verifying apparatus 1400. Signature presenting apparatus 1300 comprises proof commitment apparatus 1302, commitment of proof 1303, challenge value acquiring apparatus 1304, challenge value 1305, proof response generating apparatus 1306, and response of proof 1307.

Signature presenting apparatus 1300 is implemented by a general computer system comprising an input device, an output device, a memory device, and a control device. Commitment 1303 of proof, challenge value 1305, and response of proof 1307 are set in the memory device. Other devices are virtually established in the computer system. The above components make up proving unit 1308.

Signature presenting apparatus 1300 is supplied with

public key 1101 N,A,H,G,F,
message 1117 m,
blind signature 1116 Bcer = (Y,E,r,s), and
random number 1301.

Signature presenting apparatus 1300 sends message 1117 m to signature verifying apparatus 1400.

Signature presenting apparatus 1300 communicates with signature verifying apparatus 1400 for thereby proving the knowledge
Y,E,r,s
which satisfies

$$A = Y^E H^r G^m F^s \bmod N$$

$$E- 2^{LE} \in \{0,1\}^{Le+Lc+Ls}$$

$$m,s \in \{0,1\}^{Lq+Lc+Ls},$$

where m is open to public, as follows:

[Start of the proving procedure performed by proving unit 1308]

Signature presenting apparatus 1300 randomly generates

$$t \in \{0,1\}^{Ln/2}$$

$$e' \in \{0,1\}^{Lq+Lc+Ls}$$

$$r' \in \{0,1\}^{Ln/2+LE+Lc+Ls+2}$$

$$b'[ij] \in \{0,1\}^{Lq+Lc+Ls}$$

from input random number 1301.

Proof commitment apparatus 1302 of signature presenting apparatus 1300 generates

$$U = H^t Y \bmod N$$

$$A' = Y^{e'} H^{r'} F^{b'} \bmod N$$

and outputs U,A' as commitment of proof 1303.

Challenge value acquiring apparatus 1304 of signature presenting apparatus 1300 sends commitment of proof 1303 to the signature verifying apparatus, and waits for challenge value of proof 1305 $c \in \{0,1\}^{Lc}$ to be sent from signature verifying apparatus 1400.

When challenge value of proof 1305 is received, signature presenting apparatus 1300 calculates, with proof response generating apparatus 1306,

$$e'' = e \, c + e'$$

$$r'' = (r - tE)c + r'$$

$$b'' = s \, c + b'$$

and sends e'', r'', b'' as response of proof 1307 to signature verifying apparatus 1400.

[End of the verifying procedure]

The operation is put to an end.

[Embodiment 11]

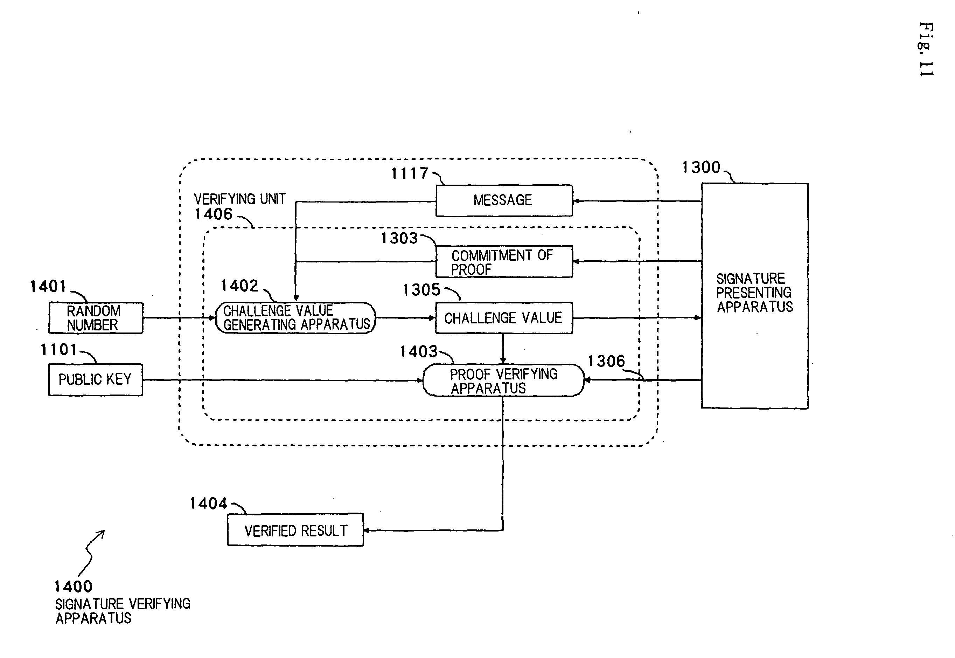

Fig. 11 is a block diagram showing an arrangement of signature verifying apparatus 1400 according to an embodiment of the present invention.

Signature verifying apparatus 1400 is supplied with random number 1401 and public key 1101, outputs verified result 1404, and sends data to and receives data from signature presenting apparatus 1300. Signature verifying apparatus 1400 comprises message 1117, commitment of proof 1303, challenge value 1305, challenge value generating apparatus 1402, and proof verifying apparatus 1403.

Signature verifying apparatus 1400 is implemented by a general computer system comprising an input device, an output device, a memory device, and a control device. Message 1117, commitment of proof 1303, and challenge value 1305 are set in the memory device. Other devices are virtually established in the computer system. Commitment 1303 of proof, challenge value 1305, challenge value generating apparatus 1402, and proof verifying apparatus 1403 make up verifying unit 1406.

Signature verifying apparatus 1400 is supplied with
public key 1101 N,A,H,G,F, and
random number 1401.

Signature verifying apparatus 1400 communicates with signature presenting apparatus 1300 to thereby verify that the signature presenting apparatus holds the knowledge
Y,E,r,s
which satisfies

$$A = Y^E H^r G^m F^s \bmod N$$

$$E - 2^{LE} \in \{0,1\}^{Le+Lc+Ls}$$

$$m,s \in \{0,1\}^{Lq+Lc+Ls}$$

$$r \in \{0,1\}^{Ln/2+Lc+Ls},$$

as follows:

[Start of the verifying procedure performed by verifying unit 1406]

Signature verifying apparatus 1400 waits for commitment of proof 1303 U,A' to be sent from signal presenting apparatus 1300.

When commitment of proof 1303 is received, challenge value generating apparatus 1402 randomly generates

$$\text{challenge value of proof 1305 } c \in \{0,1\}^{Lc}$$

from input random number 1401, sends it to signal presenting apparatus 1300, and waits for response 1306 of proof e", r", b" from signal presenting apparatus 1300.

When response 1306 of proof e", r", b" is received, proof verifying apparatus 1403 of signature verifying apparatus 1400 sets

$$c' = c\, 2^{LE} + e''$$

and confirms that all of

$$U^{c'} H^{r''} F^{b''[ij]} = A^c A' G^{-mc} \bmod N$$

$$e'' \in \{0,1\}^{Le+Lc+Ls}$$

$$b'' \in \{0,1\}^{Lq+Lc+Ls}$$

are satisfied. Upon confirmation, proof verifying apparatus 1403 outputs a proof as verified result 1404 representing valid.

[End of verifying procedure 1406]

If the proof verification is valid, then the signature presentation is regarded as valid.

Embodiments 12, 13 of the present invention will be described below. First, matters common to these embodiments will be described below.

L=(Lm,Ls,Lc,Le,Lq,Ln,Lp,LE) represents a string of variables serving as a measure of safety. If it uses values (380,60,160,60,160,2048,1600,382), for example, then it indicates that essential safety is provided as of the year 2005. These values need to be greater as the computer performance increases.

p and q represent prime numbers satisfying q|p-1, and Gq a partial group of the order q of a multiplicative group (Z/pZ)*.

A signature receiving apparatus stores two data, i.e., a secret identifier which is an identifier that is secret and a public identifier which is an identifier that is open to the public.

m and n represent integers, B[j] relative to j=1,···,m represent elements of Gq that are uniformly selected at random, and p,q,m,n,B[j] represent elements defining forms of the above identifiers, and are referred to as domain variables and denoted as Dom.

Specifically, the secret identifier of the signature receiving apparatus is an n x m matrix randomly generated in the field Z/qZ, i.e.,

$$a[ij] \in Z/qZ; i=1,\cdots,n; j=1,\cdots,m$$

and is referred to as Sid. The public identifier is D[j] relative to i=i,···,n, represented by

$$D[i] = \Pi_{j=1}{}^{m} B[j]^{a[ij]} \bmod p \qquad \cdots(1)$$

This is referred to as Pid.

The signature apparatus stores two data, i.e., a secret key and a public key. P,Q,P',Q' are four randomly generated prime numbers which satisfy the relationships P=2P'+1, Q=2Q'+1, and are integral numbers where N=PQ. With respect to i=1,···,n;j=1,···,m, A,H,G[ij] are elements uniformly selected at random from QR(N).

The secret key is (P,Q) and is referred to as Skey.

The public key is a domain variable Dom and A,H,G[ij]: i=1,···,n;j=1,···,m, and is referred to as Pkey.

The individual embodiments will be described below.

[Embodiment 12]

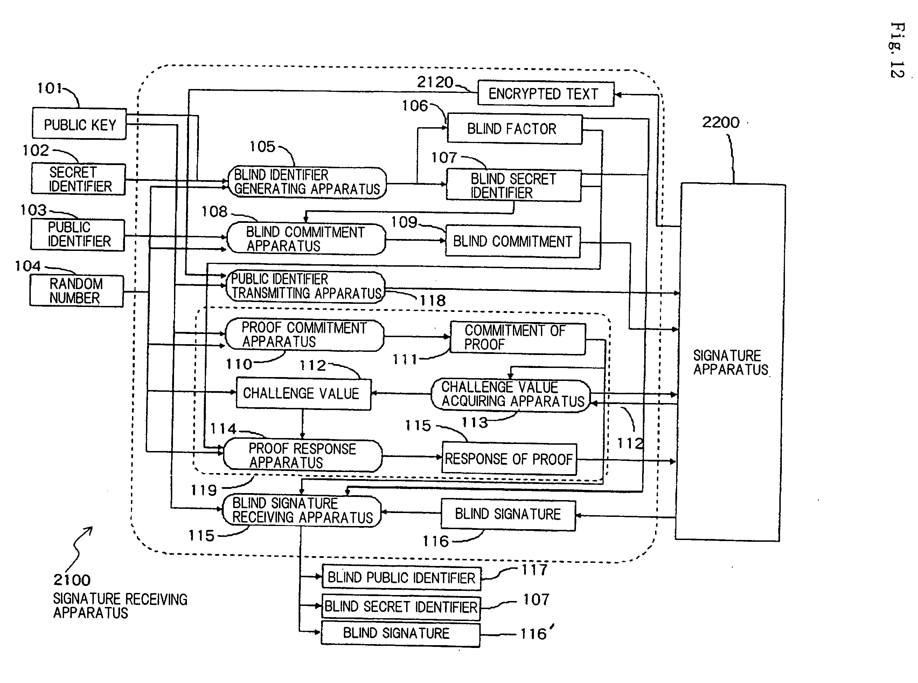

Fig. 12 is a block diagram showing an arrangement of signature receiving apparatus 2100 according to the present invention.

In the present embodiment, signature receiving apparatus 100 according to Embodiment 1 shown in Fig. 2 is arranged such that encrypted text 2120 from signature apparatus 2200 is input to public identifier transmitting apparatus 118.

In Embodiment 1, E[1],E[2] $\in$ QR(N)$^2$ is added to Dom, and is added to secret key x where E[2]=E[1]$^x$.

First, the signal receiving apparatus receives encrypted text 2120, (C[11],C[12]),(C[ij1],C[ij2]): i=1,···,n;j=1,···, m according to the ElGamal cryptosystem with (E[1],E[2]) being the public key from the signature apparatus.

Signature receiving apparatus 100 according to Embodiment 1 calculates the blind commitment

$$H' = H^{r}\Pi_{j=1}{}^{n}\Pi_{j=1}{}^{m} G[ij]^{a'[ij]} \bmod N$$

and sends it to signature apparatus 200. Signature receiving apparatus 2100 calculates

$$H'[2] = C[12]^r \Pi_{j=1}^n \Pi_{j=1}^m G[ij2]^{a'[ij]} \bmod N$$

and sends it to proving apparatus 2200.

In the proving procedure according to Embodiment 1, a commitment of proof is generated. According to the present embodiment, signature receiving apparatus 2100 calculates, instead of H",

$$H'[1] = C[11]^u \Pi_{j=1}^n \Pi_{j=1}^m G[ij1]^{b'[ij]} \bmod N$$

$$H'[2] = C[12]^u \Pi_{j=1}^n \Pi_{j=1}^m G[ij2]^{b'[ij]} \bmod N$$

and sends them to signature apparatus 2200.

The above features are different from Embodiment 1.

[Embodiment 13]

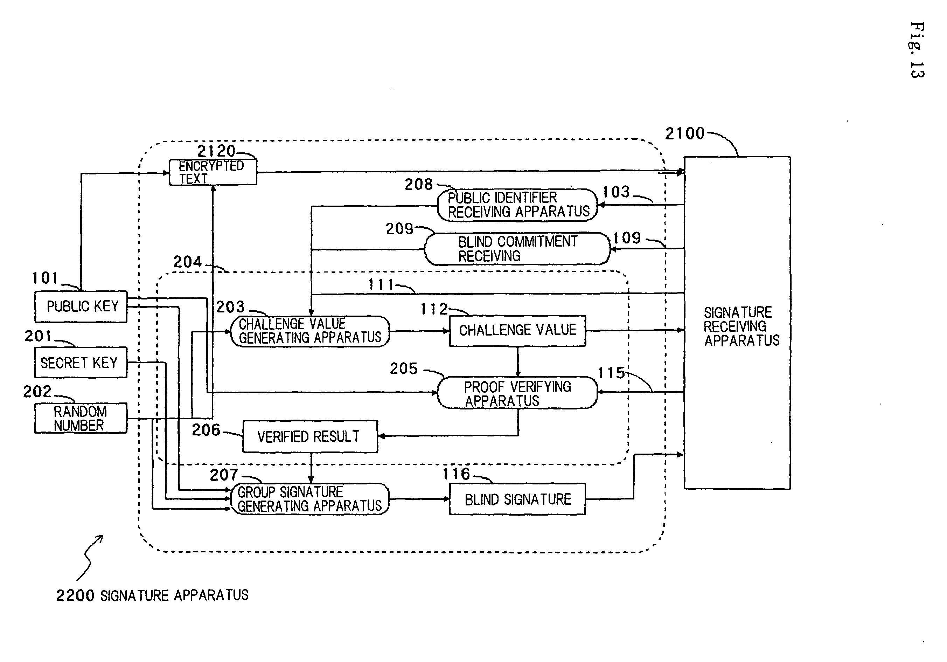

Fig. 13 is a block diagram showing an arrangement of signature apparatus 2200 according to the present invention.

According to the present embodiment, signature apparatus 200 according to Embodiment 2 shown in Fig. 3 is changed to signature apparatus 2200 for generating encrypted text 2120 from public key 101 and random number 202 and for sending it to signal receiving apparatus 2100.

Differences between signature apparatus 2200 and signature apparatus 200 according to Embodiment 2 will primarily be described below.

First, signature apparatus 2200 generates

$e \in \{0,1\}^{Le}$ such that $E=2^{LE}+e$ will be a prime number.

Signature apparatus 2200 generates encrypted text 2120 of $H^{1/E}$ (C[11],C[12]) and encrypted text of $G[ij]^{1/E}$ (C[ij1],C[ij2]): i=1,···,n;j=1,···,m according the ElGamal cryptosystem with (E[1],E[2]) being public key 101, and sends them to signature receiving apparatus 2100.

According to Embodiment 2, the blind commitment of proof received from signature receiving apparatus 100 is represented by $H'' \in QR(N)$. According to the present embodiment, the blind commitment of proof received from the signature receiving apparatus is represented by

$$(H''[1], H''[2]) \in QR(N)^2.$$

In the verifying procedure according to Embodiment 2, it is confirmed that

$$H^{u''} \Pi_{j=1}^n \Pi_{j=1}^m G[ij]^{b''[ij]} = H'^c H'' \bmod N$$

is satisfied. According to the present embodiment, signature receiving apparatus 2100 confirms, with respect to signature apparatus 2200, that

$$C[11]^{u''} \Pi_{j=1}^n \Pi_{j=1}^m G[ij1]^{b''[ij]} = H'[1]^c H''[1] \bmod N$$

$$C[12]^{u''} \Pi_{j=1}^{n} \Pi_{j=1}^{m} G[ij2]^{b''[ij]} = H'[2]^{c}H''[2] \bmod N$$

are satisfied.

If the verified result is valid, then signature apparatus 2200 randomly generates, using group signature generating apparatus 207,

$$r'' \in \{0,1\}^{Ln/2}$$

from input random number 202, then calculates

$$Y = (A / H^{r''})^{1/E} / (H'[2]/H'[1]^{x}) \bmod N$$

and sends blind signature 116 Cer=(Y,E,r'') to signature receiving apparatus 2100. The operation is then put to an end.

Embodiments 14, 15 of the present invention will be described below. First, matters common to these embodiments will be described below.

L=(Ls,Lc,Le,Lq,Ln,LE) represents a string of variables that serve as a measure of safety. If it uses values (60,160,60,160,2048,382), for example, then it indicates that essential safety is provided as of the year 2005. These values need to be greater as the computer performance increases.

A signature receiving apparatus stores message $m \in \{0,1\}^{Lq}$.

A signature apparatus stores two data, i.e., a secret key and a public key. P,Q,P',Q' are four randomly generated prime numbers which satisfy the relationships P=2P'+1, Q=2Q'+1, and are integral numbers where N=PQ. A,H,G,F are elements uniformly selected at random from QR(N) where QR(N) represents a partial set of elements of (Z/NZ)* in which an element a of certain (Z/NZ)* exists and can be expressed as $a^2$.

The secret key is (P,Q) and is referred to as Skey.

The public key is N,A,H,G,F and is referred to as Pkey.

[Embodiment 14]

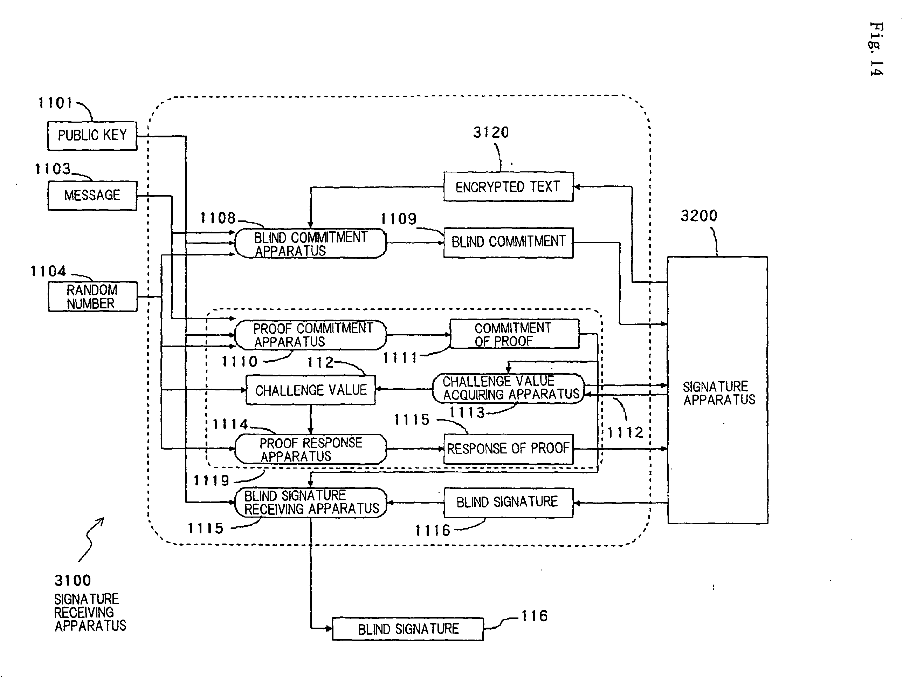

Fig. 14 is a block diagram showing an arrangement of signature receiving apparatus 3100 according to the present invention.

In the present embodiment, signature receiving apparatus 1100 according to Embodiment 8 shown in Fig. 8 is arranged such that encrypted text 3120 from signature apparatus 3200 is input to blind commitment apparatus 1108.

Differences between signature apparatus 3200 and Embodiment 8 will primarily be described below.

E[1],E[2] $\in$ QR(N)$^2$ is added to Dom in Embodiment 8, and is added to secret key x where E[2]=E[1]$^x$.

Signature receiving apparatus 3100 receives encrypted text 3120 (C[11],C[12]),(C[21],C[22]), (C[31],C[32]) according to the ElGamal cryptosystem with (E[1],E[2]) being the public key from signature apparatus 3200.

Signature receiving apparatus 1100 according to Embodiment 8 calculates the blind commitment

$$H' = H^{r} G^{m} F^{s} \bmod N$$

and sends it to signature apparatus 1200. Signature receiving apparatus 3100 calculates

$$H'[1] = C[11]^{r} C[21]^{m} C[31]^{s} \bmod N \qquad \cdots (3)$$

$$H'[2] = C[12]^{r} C[22]^{m} C[32]^{s} \bmod N$$

and sends them to signature apparatus 3200.

In the proving procedure according to Embodiment 8, proof of a bit commitment is generated. According to the present embodiment, signature receiving apparatus 3100 calculates, instead of H",

$$H''[1] = C[11]^u \, C[21]^{m'} \, C[31]^{s'} \bmod N$$

$$H''[2] = C[12]^u \, C[22]^{m'} \, C[33]^{s'} \bmod N$$

and sends them to signature apparatus 3200.

The above features are different from Embodiment 8.

[Embodiment 15]

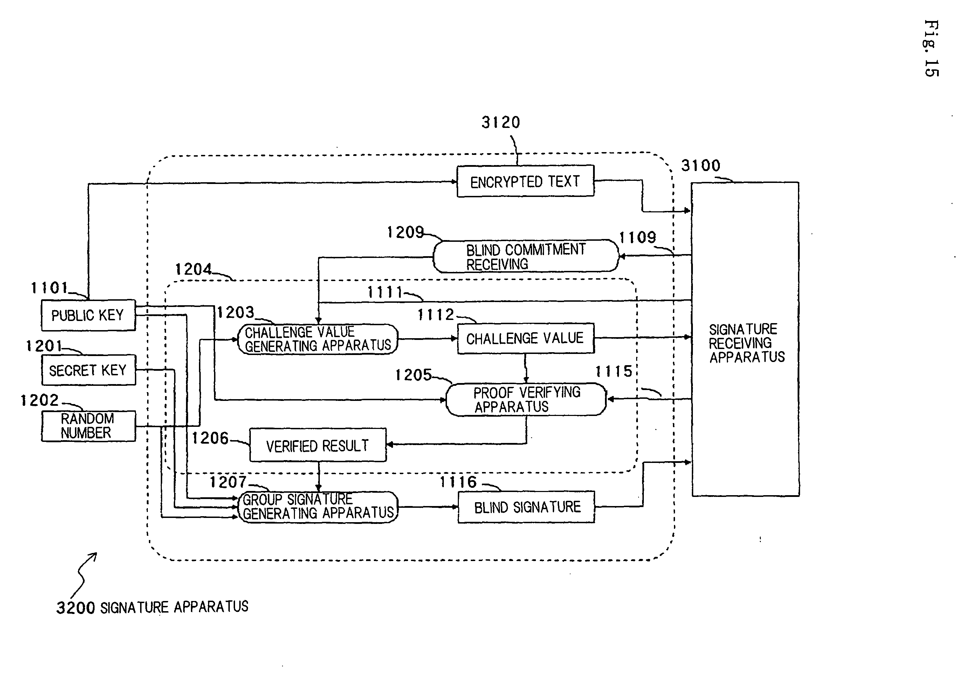

Fig. 15 is a block diagram showing an arrangement of signature apparatus 3200 according to the present invention.

According to the present embodiment, signature apparatus 1200 according to Embodiment 9 shown in Fig. 9 is changed to signature apparatus 3200 for generating encrypted text 3120 from public key 1101 and sending it to signal receiving apparatus 3100.

Differences between signature apparatus 3200 and signature apparatus 1200 according to Embodiment 9 will primarily be described below.

First, signature apparatus 3200 generates
$e \in \{o,1\}^{Le}$ such that $E=2^{LE}+e$ will be a prime number.

Signature apparatus 3200 generates an encrypted text of $H^{1/E}$ (C[11],C[12]) which is set 3120 of encrypted texts, an encrypted text of $G^{1/E}$ (C[21],C[22]), and an encrypted text of $F^{1/E}$ (C[31],C[32]) according to the ElGamal cryptosystem with (E[1],E[2]) being the public key, and sends them to signature receiving apparatus 3100.

According to Embodiment 9, the blind commitment of proof received from signature receiving apparatus 1100 is represented by $H' \in QR(N)$. According to the present embodiment, the blind commitment of proof received from the signature receiving apparatus is represented by

$$(H'[1],H'[2]) \in QR(N)^2.$$

In the verifying procedure performed by signature receiving apparatus 2100 with respect to signature apparatus 2200 according to Embodiment 12, it is confirmed that

$$H^{u''} \, G^{m''} \, F^{s''} = H'^c H'' \bmod N$$

is satisfied. According to the present embodiment, signature receiving apparatus 3100 confirms, instead, that

$$C[11]^{u''} \, C[21]^{m''} \, C[31]^{2''} = H'[1]H''[1] \bmod N$$

$$C[12]^{u''} \, C[22]^{m''} \, C[32]^{2''} = H'[2]H''[2] \bmod N$$

are satisfied.

If the verified result is valid, then the signature apparatus randomly generates, using group signature generating apparatus 1207,

$$r'' \in \{0,1\}^{Ln/2}$$

from input random number 1202, and signature apparatus 3200 calculates

$$Y=(A\,/H^{r''})^{1/E}\,/\,(H'[2]/H'[1]^X)\ \mathrm{mod}\ N$$

sends blind signature 1116 Cer=(Y,E,r") to signature receiving apparatus 3100, and ends its operation.

[Embodiment 16]

The present embodiment is an embodiment of a signature presenting apparatus where a challenge value acquiring function is a hash function. In signature presenting apparatus 1300 according to Embodiment 10, challenge value acquiring function 150 outputs a hash value of a value input thereto as challenge value 1500c.

[Embodiment 17]

The present embodiment is an embodiment of a signature verifying apparatus where a challenge value generating function is a hash function. In signature verifying apparatus 1400 according to Embodiment 11, the challenge value generating function is the same as the challenge value generating function according to Embodiment 16.

## Claims

1. A limited blind signature system comprising a signature receiving apparatus, a signature apparatus for communicating with the signature receiving apparatus, a signature presenting apparatus for being supplied with an output from the signature receiving apparatus, and a signature verifying apparatus for communicating with the signature presenting apparatus, wherein
said signature apparatus is supplied with a secret key which represents secret data, a public key, and a random number, and outputs a first blind signature from the random number to said signature receiving apparatus;
said signature receiving apparatus is supplied with a public key of said signature apparatus, a secret identifier which represents secret data, a public identifier which is public data depending on said secret identifier, and a random number, generates a blind factor which represents secret data from said random number, generates a blind secret identifier calculated from said secret identifier and said blind factor, generates a blind public identifier which is data that depends on said blind secret identifier, outputs a second blind signature, which is a group signature in which a message is a part of a member certificate, from said first blind signature, and performs data communications, including transmission of said public identifier, with said signature apparatus;
said signature presenting apparatus is supplied with said public key, said blind secret identifier, said blind public identifier, said second blind signature, and a random number, and outputs a signal indicative of a supplied state thereof to said signature verifying apparatus; and
said signature verifying apparatus is supplied with said public key and a random number, and outputs "valid" if the signal from said signature presenting apparatus indicates that said signature presenting apparatus is supplied with data of said blind public identifier, said blind secret identifier, and said second blind signature, and otherwise outputs "invalid".

2. A signature receiving apparatus in a limited blind signature system according to claim 1, wherein said second blind signature comprises a group signature generated by a secret key corresponding to said public key.

3. A signature apparatus in a limited blind signature system according to claim 1, comprising communicating means for acquiring a commitment of a blind secret identifier which represents data calculated from the public identifier, the secret identifier, and the blind factor generated from the random number, of the signature receiving apparatus, wherein a first blind signature which is a signature for the blind secret identifier that is data committed by the blind commitment is generated as a group signature generated by said secret key.

4. The signature receiving apparatus according to claim 2, comprising:

a blind secret identifier generating apparatus for being supplied with said secret identifier and said random number, for generating a blind factor from said random number, for generating a blind secret identifier from said blind factor and said secret identifier, and for outputting the blind secret identifier;

a blind commitment generating apparatus for being supplied with said public key, said blind secret identifier, and said random number, for generating a blind commitment which is a commitment of said blind secret identifier, and for sending the blind commitment to the signature apparatus;

a public identifier transmitting apparatus for sending said public identifier to the signature apparatus;

a blind commitment proving apparatus for being supplied with said blind secret identifier and said random number and communicating with the signature apparatus for proving, to the signature apparatus, the knowledge that said blind commitment is the commitment of said blind secret identifier; and

a blind signature receiving apparatus for receiving a first blind signature which is a group signature for said blind secret identifier committed by said blind commitment, from said signature apparatus, and for verifying and outputting said signature.

**5.** The signature apparatus according to claim 3, comprising:

a public identifier receiving apparatus for receiving the public identifier of the signature receiving apparatus by communicating with the signature receiving apparatus;

a blind commitment verifying apparatus for receiving a blind commitment which is a commitment of the signature receiving apparatus, for being supplied with the public identifier, the blind commitment, the public key, and the random number of said signature apparatus, for communicating with the signature receiving apparatus to verify, if a certain blind secret identifier exists which is calculated from the secret identifier which is the data on which said public identifier depends and the blind factor generated from the random number, the proof of the knowledge that said blind commitment is the commitment of the blind secret identifier, for outputting "valid" if the proof is recognized as valid, and for otherwise outputting "invalid"; and

a group signature generating apparatus for being supplied with said secret key, the public key, said blind commitment, and the random number, for generating a group signature for the blind secret identifier committed by said blind commitment if said blind commitment verifying apparatus outputs "valid", and for sending the group signature to the signature receiving apparatus.

**6.** A signature presenting apparatus in a limited blind signature system according to claim 1, comprising a knowledge proving apparatus for:

sending said blind public identifier to said signature verifying apparatus;

being supplied with the public key of the signature apparatus, the blind secret identifier, the blind secret identifier, and the group signature referred to as the second blind signature for the blind secret identifier, output from the signature receiving apparatus;

communicating with the signature verifying apparatus to prove the knowledge that a certain blind secret identifier exists and said blind public identifier is data depending on the blind secret identifier and to prove the knowledge of the second blind signature which is the group signature for the blind secret identifier.

**7.** A signature verifying apparatus in a limited blind signature system according to claim 1, comprising a knowledge proof verifying apparatus for receiving data referred to as the blind public identifier from said signature presenting apparatus, for being supplied with the public key and the random number, and for communicating with the signature presenting apparatus to prove the knowledge that a certain blind secret identifier exists and said blind public identifier is data depending on the blind secret identifier and to prove the knowledge of the second blind signature which is the group signature for the blind secret identifier.

**8.** The signature receiving apparatus according to claim 4, wherein said blind commitment proving apparatus comprises a proof commitment apparatus, a challenge value acquiring apparatus, and a proof response apparatus, and wherein said proof commitment apparatus generates a proof commitment which is a commitment of a random number, said challenge value acquiring apparatus sends a proof commitment to the signature apparatus and receives a challenge value from the signature apparatus, and said proof response apparatus generates a proof response from the random number used to generate said proof commitment, said blind secret identifier, and said blind factor.

**9.** The signature apparatus according to claim 5, wherein said blind commitment verifying apparatus comprises a challenge value generating apparatus and a proof verifying apparatus, and wherein said challenge value generating apparatus waits for data referred to as a commitment of proof to be received, generates a challenge value which is a random number using said random number when the data is received, and sends the challenge value to the signature receiving apparatus, and said signature verifying apparatus waits for data referred to as a response of proof to be received from the signature receiving apparatus, and outputs "valid" or "invalid" depending on whether said commitment of proof, said challenge value, and said response of proof satisfy a certain verifying formula or not when the data is received.

10. The signature presenting apparatus according to claim 6, wherein said challenge value acquiring apparatus is supplied with the public key and with the blind public identifier in addition to the commitment of proof, and outputs a hash value of data including said commitment of proof, said public key, and said blind public identifier as the challenge value.

11. The signature verifying apparatus according to claim 7, wherein said challenge value generating apparatus outputs a hash value of data including said commitment of proof, said public key, and said blind public identifier as the challenge value.

12. A limited blind signature system comprising a signature receiving apparatus, a signature apparatus for communicating with the signature receiving apparatus, a signature presenting apparatus for being supplied with an output from the signature receiving apparatus, and a signature verifying apparatus for communicating with the signature presenting apparatus, wherein
said signature apparatus is supplied with a secret key which represents secret data, a public key, and a random number, and outputs a first blind signature from the random number to said signature receiving apparatus;
said signature receiving apparatus is supplied with a public key of said signature apparatus, a message, a random number, and said first blind signature, and outputs a second blind signature which is a group signature in which said message is a part of a member certificate;
said signature presenting apparatus is supplied with said public key, said message, said second blind signature output from said signature receiving apparatus, and a random number, and outputs a signal indicative of a supplied state thereof to said signature verifying apparatus; and
said signature verifying apparatus is supplied with said public key and a random number, and outputs "valid" if the signal from said signature presenting apparatus indicates that said signature presenting apparatus is supplied with said message and said second blind signature, and otherwise outputs "invalid".

13. A signature receiving apparatus in a limited blind signature system according to claim 12, which transmits a blind commitment which is a commitment of said message to the signature apparatus.

14. A signature apparatus in a limited blind signature system according to claim 12, which is supplied with a blind commitment which is a commitment of said message, generates the first blind signature which is a signature for the message which is data committed by said blind commitment and which is a group signature generated by said secret key and which include said message in a member certificate, and sends the first blind signature to the signature receiving apparatus.

15. The signature receiving apparatus according to claim 13, comprising:

a blind commitment generating apparatus for being supplied with said public key, said message, and said random number, for generating a blind commitment which is a commitment of said message, and for sending the blind commitment to the signature apparatus;
a proof commitment apparatus for being supplied with said message, said public key, and said random number and for communicating with the signature apparatus for proving, to the signature apparatus, the knowledge that said blind commitment is the commitment of said message; and
a blind signature receiving apparatus for receiving the first blind signature which is committed by said blind commitment, from said signature apparatus, for verifying the first blind signature, and for outputting the second blind signature.

16. The signature apparatus according to claim 14, comprising:

a proof verifying apparatus for being supplied with the public key, the random number, and a blind commitment sent from said signature receiving apparatus, for verifying the proof of the knowledge that said blind commitment is the commitment of said message, outputting "valid" if the proven result is recognized as valid, and for otherwise outputting "invalid"; and

a group signature generating apparatus for being supplied with said secret key, the public key, said blind commitment, and the random number, generating a group signature including the message committed by said blind commitment as the member certificate if said proof verifying apparatus outputs "valid", and for sending the group signature to the signature receiving apparatus.

17. A signature verifying apparatus in a limited blind signature system according to claim 12, comprising:

a knowledge proving apparatus for sending said message to said signature verifying apparatus and holding the knowledge of a member proof with respect to a group signature which includes the message in the member certificate.

18. A signature verifying apparatus in a limited blind signature system according to claim 12, comprising:

a knowledge verifying apparatus for receiving the message from said signature presenting apparatus and verifying that said signature presenting apparatus is holding the knowledge of a member proof of a group signature which includes the message in the member certificate.

19. The signature receiving apparatus according to any one of claims 2, 4, 8, 13, and 15, which
initially receives, from the signature apparatus, an ElGamal encrypted text which is of a value produced by having a part of data included in said group signature act on said public key, in communications with the signature apparatus.

20. The signature apparatus according to any one of claims 3, 5, 9, 14, and 16, which
initially sends, to the signature receiving apparatus, an ElGamal encrypted text which is of a value produced by having a part of data included in said group signature act on said public key, in communications with the signature receiving apparatus.

Fig. 1

Fig. 2

EP 1 838 031 A1

Fig. 3

EP 1 838 031 A1

36

Fig. 4

EP 1 838 031 A1

Fig. 4

117 — BLIND PUBLIC IDENTIFIER

107 — BLIND SECRET IDENTIFIER

116 — BLIND SIGNATURE

101 — PUBLIC KEY

301 — RANDOM NUMBER

302 — PROOF COMMITMENT APPARATUS

303 — COMMITMENT OF PROOF

305 — CHALLENGE VALUE

304 — CHALLENGE VALUE ACQUIRING APPARATUS

306 — PROOF RESPONSE GENERATING APPARATUS

307 — RESPONSE OF PROOF

308 — PROVING UNIT

400 — SIGNATURE VERIFYING APPARATUS

300 — SIGNATURE PRESENTING APPARATUS

Fig. 5

Fig. 6

EP 1 838 031 A1

101 PUBLIC KEY

117 BLIND PUBLIC IDENTIFIER

303 COMMITMENT OF PROOF

501 CHALLENGE VALUE ACQUIRING APPARATUS

HASH FUNCTION

502 CHALLENGE VALUE

500
SIGNATURE PRESENTING APPARATUS

Fig. 7

DIAGRAM OF ARRANGEMENT OF LIMITED BLIND SIGNATURE SYSTEM

Fig. 8

Fig. 9

EP 1 838 031 A1

VERIFYING UNIT
1204

1101 PUBLIC KEY

1201 SECRET KEY

1202 RANDOM NUMBER

1209 BLIND COMMITMENT RECEIVING
1109

1111

1203 CHALLENGE VALUE GENERATING APPARATUS

1112 CHALLENGE VALUE

1205 PROOF VERIFYING APPARATUS
1115

1206 VERIFIED RESULT

1207 GROUP SIGNATURE GENERATING APPARATUS

1116 BLIND SIGNATURE

1100

SIGNATURE RECEIVING APPARATUS

1200 SIGNATURE APPARATUS

42

Fig. 10

1400 — SIGNATURE VERIFYING APPARATUS

1303 — COMMITMENT OF PROOF

1304 — CHALLENGE VALUE ACQUIRING APPARATUS

1307 — RESPONSE OF PROOF

1302 — PROOF COMMITMENT APPARATUS

1305 — CHALLENGE VALUE

1306 — PROOF RESPONSE GENERATING APPARATUS

1308 — PROVING UNIT

1117 — MESSAGE

1116 — BLIND SIGNATURE

1101 — PUBLIC KEY

1301 — RANDOM NUMBER

1300 — SIGNATURE PRESENTING APPARATUS

Fig. 11

EP 1 838 031 A1

VERIFYING UNIT
1406

1117 — MESSAGE

1303 — COMMITMENT OF PROOF

1401 — RANDOM NUMBER

1402 — CHALLENGE VALUE GENERATING APPARATUS

1305 — CHALLENGE VALUE

1300

SIGNATURE PRESENTING APPARATUS

1101 — PUBLIC KEY

1403 — PROOF VERIFYING APPARATUS

1306

1404 — VERIFIED RESULT

1400
SIGNATURE VERIFYING APPARATUS

Fig. 12

Fig. 13

Fig. 14

1101 PUBLIC KEY

1103 MESSAGE

1104 RANDOM NUMBER

3120

3200 SIGNATURE APPARATUS

ENCRYPTED TEXT

BLIND COMMITMENT

1109

1108 BLIND COMMITMENT APPARATUS

COMMITMENT OF PROOF

1111

1110 PROOF COMMITMENT APPARATUS

112 CHALLENGE VALUE

CHALLENGE VALUE ACQUIRING APPARATUS

1113

1112

RESPONSE OF PROOF

1115

1114 PROOF RESPONSE APPARATUS

BLIND SIGNATURE

1116

1119 BLIND SIGNATURE RECEIVING APPARATUS

1115

116 BLIND SIGNATURE

3100 SIGNATURE RECEIVING APPARATUS

Fig. 15

## INTERNATIONAL SEARCH REPORT

| International application No. |
| --- |
| PCT/JP2005/023576 |

### A. CLASSIFICATION OF SUBJECT MATTER
*H04L9/32*(2006.01), *G09C1/00*(2006.01)

According to International Patent Classification (IPC) or to both national classification and IPC

### B. FIELDS SEARCHED

Minimum documentation searched (classification system followed by classification symbols)
*H04L9/32*(2006.01), *G09C1/00*(2006.01)

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)
JSTPlus(JOIS)

### C. DOCUMENTS CONSIDERED TO BE RELEVANT

| Category* | Citation of document, with indication, where appropriate, of the relevant passages | Relevant to claim No. |
| --- | --- | --- |
| X | POPESCU C., A Secure and Efficient Group Blind Signature Scheme, Studies in Informatics and Contorol Journal, Vol.12, No.12, pages 269 to 276, 2003 | 1,2,6,7, 10-20 |
| A | JP 9-500977 A (BRANDS, Stefanus, Alfonsus), 28 January, 1997 (28.01.97), Full text & NL 9301348 A        & WO 1995/004417 A1 & EP 740872 A1         & US 5521980 A | 1-20 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23 February, 2006 (23.02.06) | 07 March, 2006 (07.03.06) |

| Name and mailing address of the ISA/<br>Japanese Patent Office | Authorized officer |
| --- | --- |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Untraceable Off-line Cash in Wallets with Observers (Extended Abstract. *Advances in Cryptology, Proceedings Crypto '93, Lecture Note on Computer Science 773,* 1994, 302-318
- A Practical and Provable Secure Coalition-Resistant Group Signature Scheme. **G. ATENIESE ; J. CAMENISCH ; M. JOYE ; G. TSUDIK.** Advances in Cryptology - CRYPT02000, LNCS 1880. Springer-Verlag, 2000, 255-270
- Untraceable Off-line Cash in Wallets with Observers (Extended Abstract. Advances in Cryptology, Proceedings Crypto '93, Lecture Note on Computer Science 773. Springer-Verlag, 1994, 302-318

- A Practical and Provable Secure Coalition-Resistant Group Signature Scheme. **G. ATENIESE ; J. CAMENISCH ; M. JOYE ; G. TSUDIK.** Advances in Cryptology - CRYPT02000, LNCS. Springer-Verlag, 2000, vol. 1880, 255-270
- **RAN GANETTI ; ODED GOLDREICH ; SHAI HALEVI.** The Random Oracle Methodology, Revisited (Preliminary Version. *STOC,* 1998, 209-218